# FASCICULE DE BREVET EUROPEEN

(11) **EP 3 688 104 B1**
(45) Date de publication et mention de la délivrance du brevet: **30.06.2021**
(21) Numéro de dépôt: 18786841.9
(22) Date de dépôt: 21.09.2018
(51) Int. Cl.: C09D 5/44, F16G 1/12, C09D 7/61, B05D 1/18, B05D 3/02, B32B 3/08, B32B 3/30, B32B 25/04, B32B 25/12, B32B 25/14, B32B 25/16, C08K 3/32, C08G 8/04, C09J 161/12, C25D 13/16, C25D 13/22, F16G 5/10, F16G 5/20, B05D 3/14

(54) **PROCÉDÉ D'ÉLECTRODÉPOSITION D'UNE COMPOSITION ADHÉSIVE AQUEUSE COMPORTANT UN SEL DE PHOSPHATE ET UNE RÉSINE THERMODURCISSABLE SUR UN ÉLÉMENT CONDUCTEUR**
ELEKTROTAUCHLACKIERUNGSVERFAHREN VON EINER WÄSSRIGENKLEBSTOFFZUSAMMENSETZUNG ENTHALTEND EIN PHOSPHATSALZ UND EIN WÄRMEHÄRTBARES HARZ AUF EINEM LEITFÄHIGEN ELEMENT
ELECTRODEPOSITION PROCESS OF AN AQUEOUS ADHESIVE COMPOSITION COMPRISING A PHOSPHATE SALT AND A THERMOSET RESIN ON A CONDUCTIVE ELEMENT

(30) Priorité: 29.09.2017 FR 1759100
(43) Date de publication de la demande: 05.08.2020
(73) Titulaire: Compagnie Générale des Etablissements Michelin, 63000 Clermont-Ferrand (FR)
(72) Inventeur: MICHOUD, Clément, 63040 Clermont-Ferrand Cedex 9 (FR); DOISNEAU, David, 63040 Clermont-Ferrand Cedex 9 (FR); ROUBY, Mickael, 63040 Clermont-Ferrand Cedex 9 (FR)
(74) Mandataire: Louret, Sylvain
(86) Numéro de dépôt international: PCT/FR2018/052309
(87) Numéro de publication internationale: WO 2019/063914

(56) Documents cités:
- EP-A2- 0 209 023
- WO-A1-2015/007641
- DE-A1- 4 434 593

## Description

Le domaine de la présente invention est celui des éléments conducteurs et des compositions adhésives ou « colles » destinées à faire adhérer de tels éléments conducteurs à des matrices élastomériques telles que celles utilisées couramment dans les articles ou produits semi-finis en élastomère ou encore dans le domaine des pneumatiques ou des courroies.

La présente invention est plus particulièrement relative à un procédé d'électrodéposition d'une composition adhésive sur au moins un élément conducteur, à un dispositif d'électrodéposition d'une composition adhésive sur au moins un élément conducteur, à un élément conducteur revêtu susceptible d'être obtenu par le procédé d'électrodéposition, au composite d'élastomère comprenant cet élément conducteur et à des pneumatiques ou encore des courroies renforcés par de tels composites d'élastomère.

On connait de l'état de la technique des éléments filaires en acier pour pneumatique comprenant un ou plusieurs fils en acier.

Une première solution pour faire adhérer ces fils en acier à des matrices d'élastomères est d'utiliser des colles connues sous la dénomination « RFL » (pour résorcinol-formaldéhyde-latex), comme par exemple décrites dans EP2006341. Ces colles RFL comprennent de manière bien connue une résine phénolique thermodurcissable, obtenue par la condensation du résorcinol avec le formaldéhyde, et un ou plusieurs latex d'élastomère diénique en solution aqueuse.

Les colles RFL de EP2006341 assurent une bonne adhésion du ou des fils en acier revêtus à des matrices d'élastomères sans que ces derniers ne soient traités en surface, c'est-à-dire en l'absence d'une couche d'un revêtement métallique, par exemple une couche de laiton. Toutefois, la colle RFL nécessite l'utilisation d'un polymère halogéné et d'un oxyde métallique. En outre, cette colle RFL nécessite l'utilisation d'une matrice d'élastomère comprenant une composition de caoutchouc acrylique et ne permet donc pas une adhésion satisfaisante avec n'importe quelle matrice d'élastomère.

Une deuxième solution pour faire adhérer ces fils en acier à des matrices d'élastomères est de revêtir les fils en acier d'une couche de laiton. Cette deuxième solution est la solution industrielle la plus répandue et la plus efficace. Lors de la cuisson du pneumatique, on forme une interface adhésive comprenant de l'oxyde de zinc, du sulfure de zinc et du sulfure de cuivre issus de la réaction entre le laiton et la matrice d'élastomère. Une telle interface et les mécanismes physico-chimiques correspondants sont notamment décrits dans l'article « Mechanism and theories of rubber adhésion to steel cords - An overview», W. J. Van Ooij, Rubber Chemistry and Technology, 421-456, Vol.57. WO2015007641 décrit une composition de résine phénol-aldéhyde et un latex insaturé, utilisée pour renforcer un composite élastomérique pour les pneus.

Toutefois, il est nécessaire, notamment pour la formation des sulfures de cuivre et de zinc, de disposer d'une matrice d'élastomère à base d'une composition d'élastomère comprenant un système de réticulation comprenant un fort taux de soufre moléculaire compris entre 6 et 12 pce. Toutefois, une telle matrice d'élastomère présente, en raison du fort taux de soufre moléculaire, une durée de stockage limitée à cause des risques de pré-vulcanisation de la composition d'élastomère à température ambiante.

Ainsi, les concepteurs d'articles en élastomère, notamment les manufacturiers de pneumatiques, ont pour objectif aujourd'hui de trouver de nouveaux procédés simples permettant de faire adhérer de façon satisfaisante les éléments filaires conducteurs aux matrices d'élastomères sans que celles-ci ne soient nécessairement à base d'une composition de caoutchouc acrylique ou que l'on doive utiliser la colle en association avec un polymère halogéné et un oxyde métallique.

Il est souhaitable que cette adhésion soit initialement, c'est-à-dire après refroidissement suite à la cuisson, relativement élevée et que cette adhésion soit peu dégradée par la corrosion.

Au cours de ses recherches, la Demanderesse a découvert un procédé permettant de répondre à l'objectif ci-dessus.

L'invention a donc pour objet un procédé d'électrodéposition d'une composition adhésive sur au moins un élément conducteur, procédé dans lequel :
- on met en contact l'élément conducteur avec la composition adhésive comprenant :
   - au moins un sel de phosphate et,
   - au moins une résine à base de :
      - au moins un composé A1, le composé A1 étant choisi parmi :
         ∘ un composé A11 comprenant au moins deux fonctions, l'une de ces fonctions étant une fonction hydroxyméthyle, l'autre étant une fonction aldéhyde ou une fonction hydroxyméthyle, ou
         ∘ un composé A12 comprenant au moins une fonction aldéhyde, ou
         ∘ un mélange d'un composé A11 et d'un composé A12 ; et
      - au moins un phénol A21 ;
- on applique une différence de potentiel entre l'élément conducteur et la composition adhésive de façon à revêtir l'élément conducteur d'une couche adhésive à base de la composition adhésive.

La Demanderesse émet ainsi l'hypothèse que le procédé d'électrodéposition utilisant la combinaison du sel de phosphate et de la résine permet de créer une couche de passivation à la surface de l'élément conducteur, cette couche de passivation présentant d'une part une bonne adhésion initiale entre l'élément conducteur et une matrice élastomérique et d'autre part de garantir une résistance à la corrosion élevée de l'interface adhésive, et ce, sans pour autant utiliser une matrice d'élastomère spécifique, de polymère halogéné et d'oxyde métallique.

En outre, on obtient un meilleur taux de couverture par la couche adhésive de l'élément conducteur par rapport à un procédé de revêtement de trempage classique.

De plus, le sel de de phosphate, en plus de participer à la formation de la couche de passivation, a un effet tampon et permet de stabiliser le pH de la composition adhésive.

Un autre objet de l'invention concerne un dispositif d'électrodéposition d'une composition adhésive sur au moins un élément conducteur, le dispositif comprenant :
- des moyens de mise en contact de l'élément conducteur avec une composition adhésive, la composition adhésive comprenant :
   - au moins un sel de phosphate et,
   - au moins une résine à base de:
      - au moins un composé A1, le composé A1 étant choisi parmi :
         ∘ un composé A11 comprenant au moins deux fonctions, l'une de ces fonctions étant une fonction hydroxyméthyle, l'autre étant une fonction aldéhyde ou une fonction hydroxyméthyle, ou
         ∘ un composé A12 comprenant au moins une fonction aldéhyde, ou
         ∘ un mélange d'un composé A11 et d'un composé A12 ; et
      - au moins un phénol A21 ;
      - des moyens permettant de créer une différence de potentiel entre la composition adhésive et l'élément conducteur.

L'invention concerne également un élément conducteur revêtu susceptible d'être obtenu par le procédé tel que défini précédemment.

L'invention concerne également un composite d'élastomère renforcé d'au moins un élément conducteur revêtu tel que défini précédemment, comprenant une matrice d'élastomère dans laquelle est noyé l'élément conducteur revêtu.

L'invention concerne également un pneumatique comprenant au moins un élément conducteur revêtu tel que défini précédemment ou un composite d'élastomère tel que défini précédemment.

L'invention concerne également une courroie comprenant au moins un élément conducteur revêtu tel que défini précédemment ou un composite d'élastomère tel que défini précédemment.

L'invention concerne enfin l'utilisation d'une composition adhésive comprenant :
- au moins un sel de phosphate et,
- au moins une résine à base de :
   - au moins un composé A1, le composé A1 étant choisi parmi :
      ∘ un composé A11 comprenant au moins deux fonctions, l'une de ces fonctions étant une fonction hydroxyméthyle, l'autre étant une fonction aldéhyde ou une fonction hydroxyméthyle, ou
      ∘ un composé A12 comprenant au moins une fonction aldéhyde, ou
      ∘ un mélange d'un composé A11 et d'un composé A12 ; et
   - au moins un phénol A21 ;
pour le revêtement par électrodéposition d'une couche adhésive à base de la composition adhésive sur un élément conducteur.

Le procédé selon l'invention permet une augmentation notable de la durée de vie des composites selon l'invention, et donc des pneumatiques ou des courroies les comportant, notamment dans des conditions humides démontrant la résistance à la corrosion de l'interface adhésive créée.

Par élément conducteur, on entend que l'objet est électriquement conducteur. Dans un mode de réalisation préférentiel, l'élément conducteur peut donc être métallique.

Par couche revêtant « directement » un objet, on entend que la couche est au contact de l'objet sans qu'aucun autre objet, notamment une autre couche, ne soit interposé entre les deux.

Par pce, on entend parties en poids pour cent parties d'élastomère.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Dans le cadre de l'invention, les produits carbonés mentionnés dans la description, peuvent être d'origine fossile ou biosourcés. Dans ce dernier cas, ils peuvent être, partiellement ou totalement, issus de la biomasse ou obtenus à partir de matières premières renouvelables issues de la biomasse.

Dans la présente description, sauf indication expresse différente, tous les pourcentages (%) indiqués sont des % en masse.

Par composition d'élastomère, on entend une composition comprenant au moins un élastomère (ou indistinctement caoutchouc) et au moins un autre constituant.

Par élastomère (ou indistinctement caoutchouc) "diénique", on entend un élastomère issu au moins en partie (c'est-à-dire un homopolymère ou un copolymère) de monomère(s) diène(s) (i.e., porteur(s) de deux doubles liaisons carbone-carbone, conjuguées ou non). Par "élastomère isoprénique", on entend un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

Par matrice élastomérique, on entend une matrice à comportement élastomérique.

Par "position méta l'une par rapport à l'autre", on entendra que les fonctions hydroxyle sont portées par des carbones du noyau aromatique séparés l'un de l'autre par un unique autre carbone du noyau aromatique.

Par "en position ortho d'une fonction", on entendra la position occupée par le carbone du noyau aromatique immédiatement adjacent au carbone du noyau aromatique portant la fonction.

Par "chaînon" d'un noyau, on entendra un atome constitutif du squelette du noyau. Ainsi, par exemple, un noyau benzénique comprend six chaînons, chaque chaînon étant constitué par un atome de carbone. Dans un autre exemple, un noyau furanique comprend cinq chaînons, quatre chaînons étant chacun constitué par un atome de carbone et le chaînon restant étant constitué par un atome d'oxygène.

«CHO» représente la fonction aldéhyde.

« CH2OH » représente la fonction hydroxyméthyle.

Par « polyphénol aromatique » on entend un composé aromatique comprenant au moins un noyau benzénique porteur de plus d'une fonction hydroxyle.

Par « résine à base de », il faut comprendre que la résine comporte le mélange et/ou le produit de réaction des différents constituants de base utilisés pour cette résine tel que cela est défini ci-dessus et que cette résine est uniquement à base des constituants à base de la résine. Ainsi les constituants de base sont les réactifs destinés à réagir ensemble lors de la condensation finale de la résine et ne sont pas des réactifs destinés à réagir ensemble pour former ces constituants de base.

Conformément à l'invention, les constituants de base comprennent donc au moins un composé A1 et au moins un phénol A21. Dans un mode de réalisation, les constituants de base peuvent comprendre d'autres constituants additionnels différents du composé A1 et du phénol A21. Dans un autre mode de réalisation, les constituants de base sont constitués d'au moins un composé A1 et d'au moins un phénol A21.

De préférence, dans le mode de réalisation où les constituants de base comprennent d'autres constituants additionnels, ces autres constituants additionnels sont dépourvus de formaldéhyde et/ou dépourvus de donneur de méthylène choisi dans le groupe constitué par l'hexa-méthylènetétramine (HMT), l'hexamethoxyméthylmélamine (H3M), l'hexaethoxyméthylmélamine, le chlorure de lauryloxyméthylpyridinium, le chlorure d'éthoxyméthylpyridinium, des polymères d'hexaméthoxyméthylmélamine de trioxanne de formaldéhyde, l'hexakis(méthoxyméthyl)mélamine, la N,N',N"-triméthyl/-N,N',N"-triméthylolmélamine, l'hexaméthylolmélamine, la N-méthylolmélamine, la N,N'-diméthylolmélamine, la N,N',N"-tris(méthoxyméthyl)mélamine, la N,N',N"-tributyl-N,N',N"-triméthylolmélamine. Plus avantageusement, ces autres constituants additionnels sont dépourvus de formaldéhyde et dépourvus des donneurs de méthylène décrits dans ce paragraphe.

Plus préférentiellement, dans le mode de réalisation où les constituants de base comprennent d'autres constituants additionnels, ces autres constituants additionnels sont dépourvus de formaldéhyde et/ou dépourvus de donneur de méthylène choisi dans le groupe constitué par l'hexaméthylènetétramine, l'hexaéthoxyméthylmélamine, l'hexaméthoxyméthylmélamine, le chlorure de lauryloxyméthylpyridinium, le chlorure d'éthoxyméthylpyridinium, l'hexaméthoxyméthylmélamine de trioxanne et les oxyméthylmélamines N-substituées répondant à la formule générale: 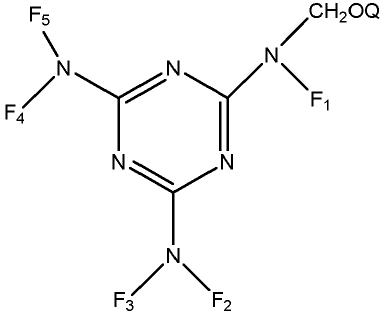 dans laquelle Q représente un groupe alkyle contenant de 1 à 8 atomes de carbone; F₁, F₂, F3, F₄ et F₅ sont choisis, indépendamment l'un de l'autre, parmi le groupe constitué par un atome d'hydrogène, par un groupe alkyle contenant de 1 à 8 atomes de carbone, par le groupe -CH2OQ et leurs produits de condensation. Plus avantageusement, ces autres constituants additionnels sont dépourvus de formaldéhyde et dépourvus des donneurs de méthylène décrits dans ce paragraphe.

Encore plus préférentiellement, dans le mode de réalisation où les constituants de base comprennent d'autres constituants additionnels, ces autres constituants additionnels sont dépourvus de formaldéhyde et/ou dépourvus de donneur de méthylène. Plus avantageusement, ces autres constituants additionnels sont dépourvus de formaldéhyde et dépourvus des donneurs de méthylène.

Par dépourvu de formaldéhyde ou dépourvu de donneur de méthylène, on entend que le taux massique total du formaldéhyde ou du ou des donneurs de méthylène appartenant aux groupes décrits ci-dessus en poids total du ou des composés A1 dans les constituants de base est inférieur ou égal à 10%, de préférence à 5%, plus préférentiellement à 2% et encore plus préférentiellement à 1%.

Par dépourvu de formaldéhyde et dépourvu de donneur de méthylène, on entend que le taux massique total du formaldéhyde et du ou des donneurs de méthylène appartenant aux groupes décrits ci-dessus en poids total du ou des composés A1 dans les constituants de base est inférieur ou égal à 10%, de préférence à 5%, plus préférentiellement à 2% et encore plus préférentiellement à 1%.

Par l'expression « couche adhésive à base de », il faut bien entendu comprendre une couche adhésive comportant le mélange et/ou le produit de réaction des différents constituants de base utilisés pour former la couche adhésive, ici les constituants de base de la composition adhésive, certains d'entre eux pouvant être destinés à réagir ou susceptibles de réagir entre eux ou avec leur environnement chimique proche, au moins en partie, lors des différentes phases de fabrication de la couche adhésive, de l'élément de renfort conducteur, des composites ou articles finis, en particulier au cours d'une étape de cuisson.

Par taux d'extrait sec d'un composé ou de la composition adhésive, on entend la masse du composé ou de la composition adhésive en grammes obtenue après séchage sur la masse en grammes de la composition adhésive avant séchage. Le taux d'extrait sec est mesuré conformément à la norme NF EN 827 (mars 2006).

### PROCEDE SELON L'INVENTION

De préférence, on immerge l'élément conducteur dans la composition adhésive.

Avantageusement, on fait défiler l'élément conducteur dans la composition adhésive.

Avantageusement, on déroule en continu l'élément conducteur d'une bobine de stockage et on fait défiler en continu l'élément conducteur dans la composition adhésive.

Dans un mode de réalisation, on relie l'élément conducteur à un potentiel supérieur par rapport au potentiel auquel on relie la composition adhésive.

Avantageusement, le pH de la composition adhésive est basique c'est-à-dire strictement supérieur à 7, de façon à d'une part obtenir des phénolates en solution aqueuse et d'autre part faciliter la stabilisation des latex.

De préférence, le pH va de 8 à 14, et plus préférentiellement de 9 à 12. Ce pH est mesuré dans des conditions standards, à savoir 23°C +/- 2°C à pression atmosphérique selon la Norme AFNOR NF T 90-008 : Qualité de l'eau - Détermination du pH. On plonge une électrode du type Mettler-Toledo type INLAB 413 dans la solution puis on relève la valeur affiché au bout de 2 minutes.

De préférence, la composition adhésive comprend des tensioactifs anioniques permettant de stabiliser la composition adhésive.

L'élément conducteur peut avoir n'importe quelle dimension et/ou n'importe quelle forme géométrique. Il peut notamment être sous forme filaire, sous forme de poutre, de plaque, de grillage ou encore de tissu métallique.

Dans un mode de réalisation préféré et destiné à être utilisé dans le domaine pneumatique, l'élément conducteur est un élément filaire conducteur.

De préférence, l'élément filaire conducteur comprend au moins un monofilament élémentaire conducteur. Le ou chaque monofilement élémentaire conducteur est avantageusement métallique. Plus préférentiellement, le ou chaque monofilament élémentaire conducteur comprend une âme en acier.

Avantageusement, la teneur en eau de la composition adhésive est comprise entre 70 et 95 % en poids et de préférence entre 75 et 90 % en poids.

Le taux d'extrait sec de la composition adhésive est compris entre 5 et 30% en poids et de préférence entre 10 et 25% en poids.

La composition adhésive présente avantageusement un taux d'extrait sec de résine thermodurcissable et de latex, entre 5 et 60 %, plus préférentiellement entre 10 et 30 % en poids.

Par taux d'extrait sec de la résine thermodurcissable et de latex, on entend le rapport entre la masse de la résine thermodurcissable et de latex obtenue après séchage de la composition adhésive aqueuse sur la masse de la composition adhésive aqueuse avant séchage.

Le taux d'extrait sec du ou des latex d'élastomère(s) dans la composition adhésive aqueuse va de 3,0 à 29,0 %, de préférence de 11,0 à 24,0 % et plus préférentiellement de 13,0 à 21,0 %.

Le rapport pondéral de l'extrait sec de résine sur l'extrait sec de latex est de préférence compris entre 0,1 et 2,0.

La composition adhésive du procédé d'électrodéposition comprend donc au moins un (c'est-à-dire un ou plusieurs) sel de phosphate et au moins une (c'est-à-dire une ou plusieurs) résine; cette résine étant à base :
- d'au moins un (c'est-à-dire un ou plusieurs) composé A1, le composé A1 étant choisi parmi :
   ∘ un composé A11 comprenant au moins deux fonctions, l'une de ces fonctions étant une fonction hydroxyméthyle, l'autre étant une fonction aldéhyde ou une fonction hydroxyméthyle, ou
   ∘ un composé A12 comprenant au moins une fonction aldéhyde, ou
   ∘ un mélange d'un composé A11 et d'un composé A12 ; et
- d'au moins un (c'est-à-dire un ou plusieurs) phénol A21.

Dans un mode de réalisation préférentiel, la composition adhésive du procédé d'électrodéposition comprend donc au moins un (c'est-à-dire un ou plusieurs) sel de phosphate et au moins une (c'est-à-dire une ou plusieurs) résine; cette résine étant à base d'au moins un (c'est-à-dire un ou plusieurs) composé A11 et au moins un (c'est-à-dire un ou plusieurs) phénol A21.

Dans un autre mode de réalisation préférentiel, la composition adhésive du procédé d'électrodéposition comprend donc au moins un (c'est-à-dire un ou plusieurs) sel de phosphate et au moins une (c'est-à-dire une ou plusieurs) résine; cette résine étant à base d'au moins un (c'est-à-dire un ou plusieurs) composé A12 et au moins un (c'est-à-dire un ou plusieurs) phénol A21.

Dans encore un autre mode de réalisation, la composition adhésive du procédé d'électrodéposition comprend donc au moins un (c'est-à-dire un ou plusieurs) sel de phosphate et au moins une (c'est-à-dire une ou plusieurs) résine; cette résine étant à base d'au moins un (c'est-à-dire un ou plusieurs) composé A11 et d'au moins un (c'est-à-dire un ou plusieurs) composé A12 et au moins un (c'est-à-dire un ou plusieurs) phénol A21.

### Sel de phosphate

Un constituant essentiel de la composition adhésive est un sel de phosphate.

Avantageusement, le sel de phosphate est choisi parmi le phosphate de sodium, le phosphate de potassium et les mélanges de ces phosphates et de préférence est le phosphate de sodium.

Le phosphate de sodium est le composé qui sous forme solide est de formule Na₃PO₄ et le phosphate de potassium est le composé qui sous forme solide de formule K₃PO₄.

Les sels de phosphate de sodium et de potassium présentent l'avantage d'être solubles dans l'eau dans des conditions de températures et de pressions courantes. Ainsi, ces sels de phosphate sont solubles dans la composition adhésive aqueuse à un taux massique supérieur ou égal à 1g/L dans la composition adhésive aqueuse, de préférence à 10 g/L. Cette solubilité est mesurée dans des conditions standards, à savoir 23°C à pression atmosphérique par le protocole suivant. On prépare la composition adhésive aqueuse comprenant l'ensemble de ses constituants à l'exception du ou des sels de phosphate dont on souhaite mesure la solubilité. On pèse avec une balance de précision (0,0001g) environ exactement X g de solide à mesurer. On introduit ensuite le solide dans un erlenmeyer et on ajoute progressivement la composition adhésive aqueuse préparée dans l'erlenmeyer en agitant. Dès lors que le solide est visiblement dissous, on mesure le volume final V de la composition adhésive aqueuse préparée. Le rapport de la masse X au volume V indique la solubilité.

De préférence, la composition est dépourvue d'agent dispersant du phosphate de zinc et dépourvue de phosphate de zinc.

Plus préférentiellement, la composition adhésive est dépourvue d'agent dispersant d'un sel de phosphate insoluble dans l'eau et dépourvue de sels de phosphate insolubles dans l'eau. Dans ce mode de réalisation plus préférentiel, tous les sels de phosphate de la composition adhésive sont solubles dans l'eau.

Par agent dispersant d'un sel dans l'eau, on entend un composé qui a la propriété de maintenir en suspension des particules de ce sel dans l'eau et d'assurer la stabilité de la composition.

Dans un mode de réalisation préféré, la composition adhésive ne comprend pas d'autres sels de phosphate que les sels choisis parmi le phosphate de sodium, le phosphate de potassium et les mélanges de ces phosphates.

Dans un premier mode de réalisation où le sel de phosphate est le phosphate de sodium, on mélange le phosphate de sodium de sorte que le taux d'extrait sec de phosphate de sodium dans la composition adhésive aqueuse soit inférieur ou égal à 2,50%, de préférence inférieur ou égal à 2,00%, plus préférentiellement inférieur ou égal à 1,50% et encore plus préférentiellement inférieur ou égal à 1,00%.

Dans ce même premier mode de réalisation où le sel de phosphate est le phosphate de sodium, on mélange le phosphate de sodium de sorte que le taux d'extrait sec de phosphate de sodium dans la composition adhésive aqueuse soit supérieur ou égal à 0,40%, de préférence supérieur ou égal à 0,60%.

Très avantageusement, le phosphate tribasique Na₃PO₄ a un effet tampon et permet de maintenir un pH allant de 9 à 11,5. Le phosphate tribasique Na₃PO₄ apporte ainsi de la stabilité au pH de la composition adhésive.

Dans un deuxième mode de réalisation où le sel de phosphate est le phosphate de potassium, on mélange le phosphate de potassium de sorte que le taux d'extrait sec de phosphate de potassium dans la composition adhésive aqueuse soit inférieur ou égal à 3,00%, de préférence inférieur ou égal à 2,50%, plus préférentiellement inférieur ou égal à 2,00% et encore plus préférentiellement inférieur ou égal à 1,50%.

Dans ce même deuxième mode de réalisation où le sel de phosphate est le phosphate de potassium, on mélange le phosphate de potassium de sorte que le taux d'extrait sec de phosphate de potassium dans la composition adhésive aqueuse soit supérieur ou égal à 0,50%, de préférence supérieur ou égal à 0,80%.

Dans un troisième mode de réalisation où le sel de phosphate est un mélange de phosphate de sodium et de phosphate de potassium, on mélange le phosphate de sodium et le phosphate de potassium de sorte que le taux d'extrait sec de phosphate de potassium dans la composition adhésive aqueuse soit inférieur ou égal à 3,00%, de préférence inférieur ou égal à 2,50%, très préférentiellement inférieur ou égal à 2,00%, plus préférentiellement inférieur ou égal à 1,50% et encore plus préférentiellement inférieur ou égal à 1,00%.

Dans ce même troisième mode de réalisation où le sel de phosphate est un mélange de phosphate de sodium et de phosphate de potassium, on mélange le phosphate de sodium et le phosphate de potassium de sorte que le taux d'extrait sec de phosphate de potassium dans la composition adhésive aqueuse soit supérieur ou égal à 0,40%, de préférence supérieur ou égal à 0,50%, très préférentiellement supérieur ou égal à 0,60% et plus préférentiellement supérieur ou égal à 0,80%.

### Composé A1

Un autre constituant essentiel de la composition adhésive est un composé A1, le composé A1 étant choisi parmi :
∘ un composé A11 comprenant au moins deux fonctions, l'une de ces fonctions étant une fonction hydroxyméthyle, l'autre étant une fonction aldéhyde ou une fonction hydroxyméthyle, ou
∘ un composé A12 comprenant au moins une fonction aldéhyde, ou
∘ un mélange d'un composé A11 et d'un composé A12.

Conformément à l'invention, la résine est à base d'au moins un (c'est-à-dire un ou plusieurs) composé A1.

Dans un premier mode de réalisation, le composé A12 comprend au moins un noyau aromatique porteur d'au moins une fonction aldéhyde.

Plus préférentiellement, le composé A12 est porteur d'au moins deux fonctions aldéhyde.

Encore plus préférentiellement, le noyau aromatique du composé A12 est porteur de deux fonctions aldéhydes.

Dans un mode de réalisation, le noyau aromatique du composé A12 est choisi dans le groupe constitué par un noyau benzénique et un noyau furanique, de préférence le noyau aromatique de l'aldéhyde aromatique est un noyau benzénique.

De préférence, le composé A12 est choisi dans le groupe constitué par le 1,2-benzène-dicarboxaldéhyde, le 1,3-benzène-dicarboxaldéhyde, le 1,4-benzène-dicarboxaldéhyde, le 2-hydroxybenzène-1,3,5-tricarbaldéhyde et les mélanges de ces composés.

Dans une variante du premier mode de réalisation, le composé A12 est de formule générale **(A):** 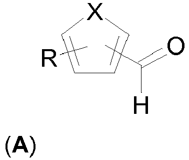 dans laquelle :
X comprend N, S ou O
R représente -H ou -CHO.

Préférentiellement, le composé A12 est de formule générale (**A**'):

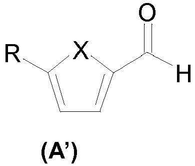

Encore plus préférentiellement, R représente -CHO.

Selon un mode de réalisation préférentiel, X représente O.

Dans une variante du composé A12 de formule générale **(A),** X représente O et R représente -H. Le composé A12 utilisé est alors de formule **(Ba):**

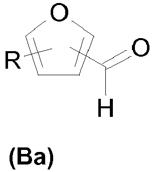

Dans une variante de l'aldéhyde de formule générale **(A'),** X représente O et R représente -H. Le composé A12 utilisé est alors le furfuraldéhyde et est de formule **(B'a):**

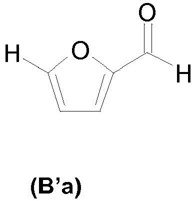

Dans une autre variante du composé A12 de formule générale **(A),** X représente O et R représente -CHO. Le composé A12 utilisé est alors de formule **(Bb):**

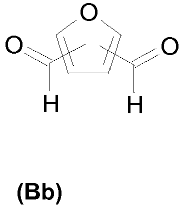

Dans une autre variante du composé A12 de formule générale **(A'),** X représente O et R représente -CHO. Le composé A12 utilisé est alors le 2,5-furanedicarboxaldéhyde et est de formule **(B'b):**

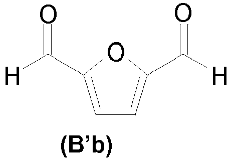

Dans un autre mode de réalisation, X comprend N.

De préférence, le composé A12 est choisi dans le groupe constitué par le furfuraldéhyde, le 2,5-furanedicarboxaldéhyde et les mélanges de ces composés.

Dans une variante du composé A12 de formule générale **(A),** X représente NH. Le composé A12 utilisé est de formule **(Ca):**

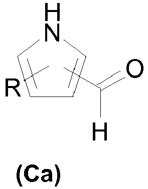

Dans une variante du composé A12 de formule générale (**A**'), X représente NH. Le composé A12 utilisé est de formule **(C'a):**

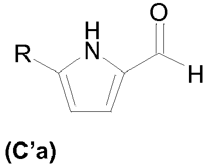

De préférence, R représente -CHO dans la variante du composé A12 de formule **(C'a)** et le composé A12 obtenu est alors le 2,5-1H-pyrroledicarboxaldéhyde.

Dans une autre variante du composé A12 de formule générale **(A),** X représente NT₁ avec T₁ représentant un groupe alkyle, aryle arylalkyle, alkylaryle ou cycloalkyle. Le composé A12 utilisé est de formule **(Cb):**

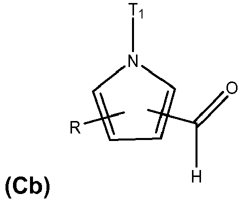

Dans un autre mode de réalisation, X comprend S.

Dans une variante du composé A12 de formule générale **(A),** X représente S. Le composé A12 utilisé est de formule **(Da):**

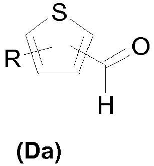

Dans une variante du composé A12 de formule générale **(A'),** X représente S. Le composé A12 utilisé est de formule **(D'a)**:

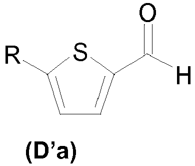

De préférence, R représente -CHO dans la variante du composé A12 de formule **(IV'a)** et est alors le 2,5-thiophènedicarboxaldéhyde.

Dans une autre variante du composé A12 de formule générale **(A),** X représente ST₂ avec T₂ représentant un groupe alkyle, aryle arylalkyle, alkylaryle ou ccloalkle. Le composé A12 utilisé est de formule **(Db):**

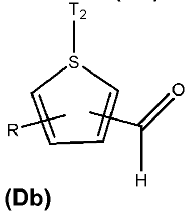

Dans encore une autre variante du composé A12 de formule générale **(A),** X représente T₃-S-T₂ avec T₂, T₃ représentant chacun indépendamment l'un de l'autre un groupe alkyle, aryle arylalkyle, alkylaryle ou cycloalkyle. Le composé A12 utilisé est de formule **(Dc):**

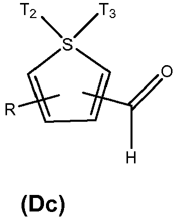

Dans encore une autre variante du composé A12 de formule générale **(A),** X représente S=O. Le composé A12 utilisé est de formule **(Dd):**

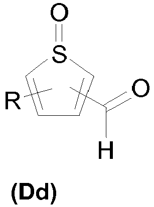

Dans encore une autre variante du composé A12 de formule générale **(A),** X représente O=S=O. Le composé A12 utilisé est de formule **(De):**

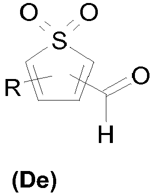

Parmi les différents modes de réalisation décrits ci-dessus, on préfèrera les modes de réalisation et les variantes dans lesquels X représente NH, S ou O. Dans ces modes de réalisation et variantes, on pourra avoir R représentant -H ou -CHO et de préférence R représentant -CHO. Dans ces modes de réalisation et variantes, on aura préférentiellement R en position 5 et le groupe -CHO en position 2 sur le noyau aromatique (formule générale (**A**')).

Dans un deuxième mode de réalisation, le composé A11 est un composé aromatique comprenant au moins un noyau aromatique porteur d'au moins deux fonctions, l'une de ces fonctions étant une fonction hydroxyméthyle, l'autre étant une fonction aldéhyde ou une fonction hydroxyméthyle.

Ainsi, dans ce deuxième mode de réalisation, c'est ledit noyau aromatique qui est porteur des fonctions hydroxyméthyle et aldéhyde. Le composé A11 répond donc, dans ce deuxième mode de réalisation, à la formule générale (I) :

HO-CH₂-Ar-B (I)

où Ar représente un noyau aromatique et B représente CHO ou CH₂OH.

Le noyau aromatique est avantageusement un noyau à 5 ou 6 chaînons, comprenant, en tant que chaînon, des atomes de carbone et éventuellement un ou plusieurs hétéroatomes, en particulier des atomes d'azote, d'oxygène, de soufre, éventuellement oxydé sous forme de N-oxyde ou de S-oxyde. Dans une variante, le noyau aromatique comprend 0, 1 ou 2 hétéroatome(s). Le reste du noyau aromatique peut être substitué ou non.

Le noyau aromatique peut porter 0, 1 ou 2 fonctions aldéhyde, avantageusement 0 ou 1 fonction aldéhyde.

Le noyau aromatique peut porter 1, 2 ou 3 fonctions hydroxyméthyle, avantageusement 1 ou 2 fonction hydroxyméthyle.

En outre, le noyau aromatique peut également porter 0, 1 ou 2 autre(s) fonction(s), en particulier hydroxyle.

Dans le mode de réalisation dans lequel le noyau aromatique est un noyau à 6 chaînons, les fonctions B et hydroxyméthyle sont avantageusement en position méta ou en para l'une par rapport à l'autre.

Dans le mode de réalisation dans lequel le noyau aromatique est un noyau à 5 chaînons, le noyau peut comprendre un ou plusieurs hétéroatomes, en particulier des atomes d'azote, d'oxygène, de soufre, éventuellement oxydé sous forme de N-oxyde ou de S-oxyde. Avantageusement, le noyau aromatique comprend 1 ou 2 hétéroatome(s), de préférence 1 hétéroatome.

Dans ce mode de réalisation dans lequel le noyau aromatique est un noyau à 5 chaînons, au moins une des trois conditions suivantes est respectée :
- le noyau aromatique comprend 0 ou une seule fonction aldéhyde ;
- le noyau aromatique comprend une ou deux fonctions hydroxyméthyle ;
- outre les fonctions aldéhyde et hydroxyméthyle, le reste du noyau aromatique n'est pas substitué.

Avantageusement, ces trois conditions sont respectées.

Dans un premier cas, le noyau aromatique comprend
- une seule fonction aldéhyde ;
- une seule fonction hydroxyméthyle ;
- outre les fonctions aldéhyde et hydroxyméthyle, le reste du noyau aromatique n'est pas substitué.

Dans un deuxième cas, le noyau aromatique comprend
- 0 fonction aldéhyde ;
- deux fonctions hydroxyméthyle ;
- outre les fonctions hydroxyméthyle, le reste du noyau aromatique n'est pas substitué.

Avantageusement, le composé A11 répond à la formule générale (II) : 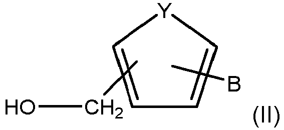 où B représente CHO ou CH₂OH, Y représente O, NR₁, NO, S, SO, SO₂, SR₂R₃, R₁ représente un hydrogène, un groupe alkyle, aryle, arylalkyle, alkylaryle ou cycloalkyle, R₂, R₃ représentent chacun, indépendamment les uns des autres, un hydrogène, un groupe alkyle, aryle, arylalkyle, alkylaryle ou cycloalkyle.

Avantageusement, le composé A11 est de formule générale (II') : 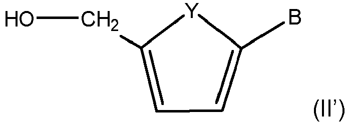 dans laquelle Y, B sont tels que définis précédemment.

Dans un mode de réalisation particulièrement avantageux, B représente CHO. Dans un autre mode de réalisation, B représente CH₂OH.

Selon un mode de réalisation préférentiel, Y représente O.

Dans une variante, le composé A11 est de formule (IIa) : 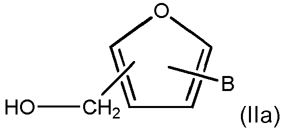 B étant tel que défini précédemment.

Et plus particulièrement, le composé A11 répond à la formule générale (II'a1) ou (II'a2) :

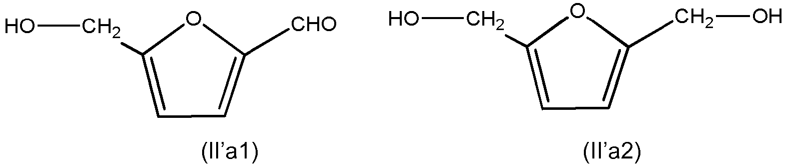

Le 5-(hydroxyméthyl)-furfural (II'a1) est un composé particulièrement adapté, étant donné que ce composé organique peut facilement être issu de ressources renouvelables. En effet, il est issu notamment de la déshydratation de certains sucres tels que le fructose, le glucose, le sucrose, la cellulose et l'insuline.

Dans un autre mode de réalisation, Y représente NR₁ ou NO, avantageusement NR₁. R₁ représente un hydrogène, un groupe alkyle, aryle, arylalkyle, alkylaryle ou cycloalkyle.

Dans une variante, le composé est de formule (IIb) : 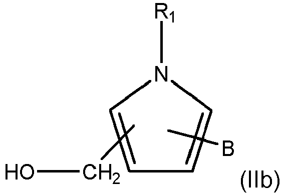 B étant tel que défini précédemment
et plus particulièrement de formule (II'b1) ou (II'b2) : 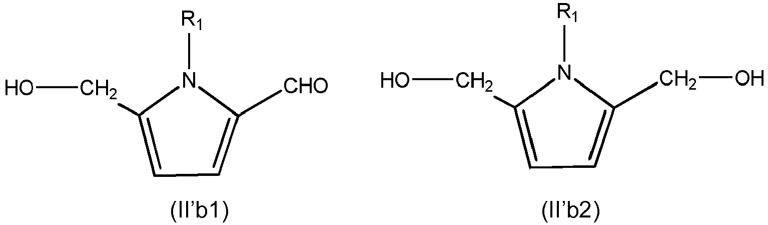 dans lesquelles R₁ est tel que défini précédemment. Avantageusement R₁ représente un hydrogène ou un groupe alkyle en C₁-C₆.

Dans un autre mode de réalisation, Y représente S, SO, SO₂ ou SR₂R₃ avec R₂ et R₃ tels que définis précédemment.

Dans une variante, le composé est de formule (IIc) :
B étant tel que défini précédemment 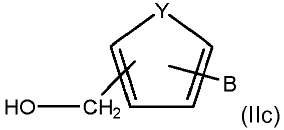 avec Y représente S, SR₂R₃, SO, SO₂, R₂, R₃ représentent chacun, indépendamment les uns des autres, un hydrogène, un groupe alkyle, aryle, arylalkyle, alkylaryle ou cycloalkyle, B, R₂ et R₃ étant tels que définis précédemment ;
et plus particulièrement de formule (II'c1) ou (II'c2) : 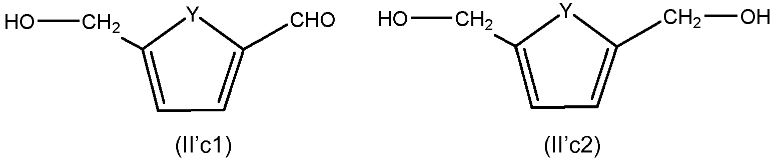 dans laquelle Y représente S, SR₂R₃, SO, SO₂, R₂, R₃ représentent chacun, indépendamment les uns des autres, un hydrogène, un groupe alkyle, aryle, arylalkyle, alkylaryle ou cycloalkyle.

Le composé peut ainsi être :

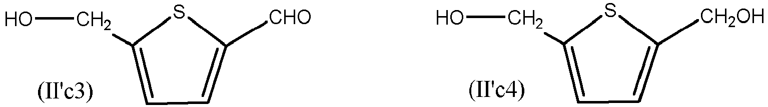

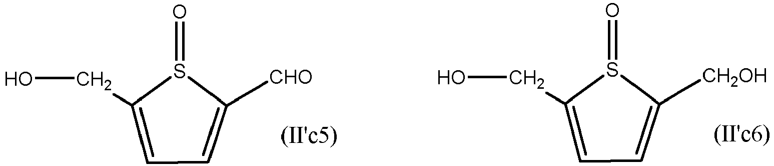

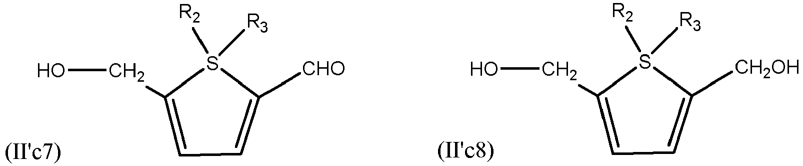

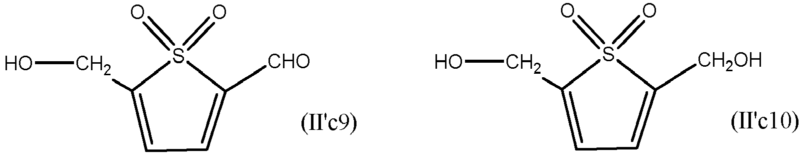

Avantageusement R₂, R₃ représentent chacun, l'un indépendamment de l'autre, un radical alkyle en C₁-C₆.

Le composé est avantageusement de formule (II'c3) ou (II'c4).

Dans une autre variante, le noyau aromatique est un noyau à 6 chaînons, pouvant comprendre 0, un ou plusieurs hétéroatomes, en particulier d'azote, éventuellement oxydé sous forme de N-oxyde. Dans une variante, le noyau aromatique comprend 0, 1, ou 2 hétéroatome(s).

Les fonctions B et hydroxyméthyle sont avantageusement en position méta ou en para l'une par rapport à l'autre.

Le noyau aromatique peut porter 0, 1 ou 2 fonctions aldéhyde, avantageusement 0 ou 1 fonction aldéhyde.

Le noyau aromatique peut porter 1, 2 ou 3 fonctions hydroxyméthyle, avantageusement 1 ou 2 fonctions hydroxyméthyle.

En outre, le noyau aromatique peut également porter 0, 1 ou 2 autre(s) fonction(s), en particulier hydroxyle.

Avantageusement, le composé A11 est de formule générale (III) : 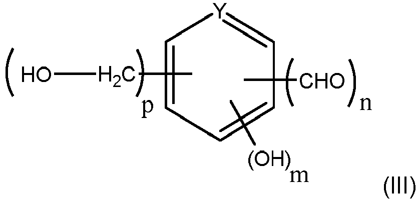 dans laquelle Y représente C ou NR₁, n vaut 0, 1 ou 2, m vaut 0 ou 1, p vaut 1, 2 ou 3. R₁ représente un hydrogène, un groupe alkyle, aryle, arylalkyle, alkylaryle ou cycloalkyle. Ainsi, p+n>1 avec p>0.

Avantageusement R₁ représente un hydrogène ou un groupe alkyle en C₁-C₆.

Dans une variante, n vaut 1, m vaut 0 et p vaut 1.

Dans une autre variante, n vaut 1, m vaut 1 et p vaut 1.

Dans une autre variante, n vaut 2, m vaut 1 et p vaut 1.

Dans une autre variante, n vaut 1, m vaut 1 et p vaut 2.

Dans une autre variante, n vaut 0, m vaut 0 et p vaut 2.

Dans une autre variante, n vaut 0, m vaut 1 et p vaut 2.

Dans une autre variante, n vaut 1, m vaut 1 et p vaut 2.

Dans une autre variante, n vaut 0, m vaut 1 et p vaut 3.

Préférentiellement le noyau aromatique du composé A11 est un noyau benzénique. Plus préférentiellement, cet aldéhyde est choisi dans le groupe constitué par le 2-hydroxymethyl-benzène-1-carboxaldéhyde, le 3- hydroxymethyl-benzène-1-carboxaldéhyde, le 4-hydroxymethyl-benzène-1-carboxaldéhyde, le 3-hydroxymethyl-6-hydroxy-benzène-1-carboxaldéhyde, le 3-hydroxymethyl-4-hydroxy-benzène-1-carboxaldéhyde, le 3-hydroxymethyl-2-hydroxy-benzène-1-carboxaldéhyde, le 3-hydroxymethyl-2-hydroxy-benzène-1,5-dicarboxaldéhyde, le 5-hydroxymethyl-2-hydroxy-benzène-1,3-dicarboxaldéhyde, le 3,5-hydroxymethyl-4-hydroxy-benzène-1-carboxaldéhyde, le 3,5-hydroxymethyl-2-hydroxy-benzène-1-carboxaldéhyde, le 1,2-hydroxymethyl-benzène, le 1,3-hydroxymethyl-benzène, le 1,4-hydroxymethyl-benzène, le 1,3-hydroxymethyl-6-hydroxy-benzène, le 1,3-hydroxymethyl-4-hydroxy-benzène, le 1,3-hydroxymethyl-2-hydroxy-benzène, le 1,3,5-hydroxymethyl-2-hydroxy-benzène, le 1,3-hydroxymethyl-6-hydroxy-benzène, le 1,3,5-hydroxymethyl-4-hydroxy-benzène, le 1,3,2-hydroxymethyl-2-hydroxy-benzène et les mélanges de ces composés.

Encore plus préférentiellement le composé A11 utilisé est le 1-hydroxymethyl-benzène-4-carboxaldéhyde de formule (IIIa) ou le 1,4-hydroxymethyl-benzène de formule (IIIb) :

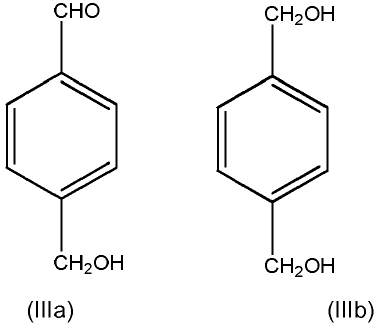

Parmi les autres avantages liés à l'utilisation des composés A11 et/ou A12, on notera que la composition adhésive peut être dépourvue de formaldéhyde dont il est souhaitable de diminuer l'utilisation, voire de la supprimer à terme dans les compositions adhésives, en raison de l'évolution récente de la réglementation européenne sur ce type de composé. En outre, le formaldéhyde est un composé dérivé du pétrole dont on souhaite le plus possible s'affranchir pour des raisons de raréfaction.

### Phénol A21

Conformément à l'invention, la résine est à base d'au moins un (c'est-à-dire un ou plusieurs) phénol A21.

Avantageusement, le phénol A21 est choisi parmi :
- un polyphénol aromatique A2 comprenant au moins un noyau aromatique porteur d'au moins deux fonctions hydroxyle en position méta l'une par rapport à l'autre, les deux positions ortho d'au moins une des fonctions hydroxyle étant non substituées
- un monophénol aromatique A2' comprenant au moins un noyau aromatique à six chainons portant une unique fonction hydroxyle,
   - les deux positions ortho de la fonction hydroxyle étant non substituées ou
   - au moins une position ortho et la position para de la fonction hydroxyle étant non substituées
- un mélange de A2 et A2'.

Dans un mode de réalisation, le phénol est un polyphénol aromatique A2 comportant un ou plusieurs noyau(x) aromatique(s). Le polyphénol aromatique comprend au moins un noyau aromatique porteur d'au moins deux fonctions hydroxyle en position méta l'une par rapport à l'autre, les deux positions ortho d'au moins une des fonctions hydroxyle étant non substituées.

Dans un autre mode de réalisation, le phénol est un monophénol aromatique A2' comprenant au moins un noyau aromatique à six chainons portant une unique fonction hydroxyle. Sur ce monophénol aromatique, les deux positions ortho de la fonction hydroxyle sont non substituées, ou bien au moins une position ortho et la position para de la fonction hydroxyle sont non substituées.

Dans encore un autre mode de réalisation, le phénol est un mélange du polyphénol aromatique A2 et du monophénol aromatique A2' tels que décrits ci-dessus.

Conformément à l'invention, le polyphénol aromatique A2 peut être, dans un mode de réalisation, une molécule simple de polyphénol aromatique comprenant un ou plusieurs noyaux aromatiques, au moins un de ces noyaux aromatiques, voire chaque noyau aromatique, étant porteur d'au moins deux fonctions hydroxyle en position méta l'une par rapport à l'autre, les deux positions ortho d'au moins une des fonctions hydroxyle étant non substituées.

De façon analogue, le monophénol aromatique A2' peut être, dans un mode de réalisation, une molécule simple de monophénol aromatique comprenant un ou plusieurs noyaux aromatiques à six chainons, au moins un de ces noyaux aromatiques à six chainons, voire chaque noyau aromatique à six chainons, étant porteur d'une unique fonction hydroxyle, les deux positions ortho de la fonction hydroxyle sont non substituées, ou bien, au moins une position ortho et la position para de la fonction hydroxyle sont non substituées.

De telles molécules simples ne comprennent pas de motif répétitif.

Conformément à l'invention, le polyphénol aromatique A2 peut être, dans un autre mode de réalisation, une résine pré-condensée à base :
- d'au moins un polyphénol aromatique, comprenant au moins un noyau aromatique porteur d'au moins deux fonctions hydroxyle en position méta l'une par rapport à l'autre, les deux positions ortho d'au moins une des fonctions hydroxyle étant non substituées ; et
- d'au moins un composé comprenant au moins une fonction aldéhyde et/ou au moins un composé comprenant au moins deux fonctions hydroxyméthyle portées par un noyau aromatique.

Une telle résine pré-condensée à base de polyphénol aromatique est conforme à l'invention et comprend, contrairement à la molécule simple décrite ci-dessus, un motif répétitif. En l'espèce, le motif répétitif comprend au moins un noyau aromatique porteur d'au moins deux fonctions hydroxyle en position méta l'une par rapport à l'autre.

D'une façon analogue et conformément à l'invention, le monophénol aromatique A2' peut être, dans un autre mode de réalisation, une résine pré-condensée à base :
- d'au moins un monophénol aromatique comprenant au moins un noyau aromatique à six chainons portant une unique fonction hydroxyle :
   - les deux positions ortho de la fonction hydroxyle sont non substituées, ou
   - au moins une position ortho et la position para de la fonction hydroxyle sont non substituées;
- d'au moins un composé comprenant au moins une fonction aldéhyde et/ou au moins un composé comprenant au moins deux fonctions hydroxyméthyle portées par un noyau aromatique.

Une telle résine pré-condensée à base de monophénol aromatique est conforme à l'invention et comprend, contrairement à la molécule simple décrite ci-dessus, un motif répétitif. En l'espèce, le motif répétitif comprend au moins un noyau aromatique à six chainons porteur d'une unique fonction hydroxyle.

Dans un autre mode de réalisation, le phénol A21 est un mélange d'un polyphénol aromatique formant une molécule simple et d'une résine pré-condensée à base de polyphénol aromatique.

Dans encore un autre mode de réalisation, le phénol A21 est un mélange d'un monophénol aromatique formant une molécule simple et d'une résine pré-condensée à base de monophénol aromatique.

Dans les modes de réalisation particuliers qui suivent, on décrit le ou les noyaux aromatiques du polyphénol aromatique et/ou du monophénol aromatique. Par souci de clarté, on y décrit le « polyphénol aromatique » et/ou le « monophénol aromatique » sous sa forme de molécule simple. Ce polyphénol aromatique et/ou ce monophénol aromatique pourra ensuite être condensé et définira en partie le motif répétitif. Les caractéristiques de la résine pré-condensée sont décrites plus en détail par la suite.

### Polyphénol aromatique A2

Dans un mode de réalisation préféré, le noyau aromatique du polyphénol aromatique est porteur de trois fonctions hydroxyle en position méta les unes par rapport aux autres.

De préférence, les deux positions ortho de chaque fonction hydroxyle sont non substituées. On entend par là que les deux atomes de carbone situés de part et d'autre (en position ortho) de l'atome de carbone hydroxylé (i.e., porteur de la fonction hydroxyle) sont porteurs d'un simple atome d'hydrogène.

Encore plus préférentiellement, le reste du noyau aromatique du polyphénol aromatique est non substitué. On entend par là que les autres atomes de carbone du reste du noyau aromatique (ceux autres que les atomes de carbone porteurs des fonctions hydroxyle) sont porteurs d'un simple atome d'hydrogène.

Dans un mode de réalisation, le polyphénol aromatique comprend plusieurs noyaux aromatiques, au moins deux d'entre eux étant chacun porteur d'au moins deux fonctions hydroxyle en position méta l'une par rapport à l'autre, les deux positions ortho d'au moins une des fonctions hydroxyle d'au moins un noyau aromatique étant non substituées.

Dans un mode de réalisation préféré, au moins un des noyaux aromatiques du polyphénol aromatique est porteur de trois fonctions hydroxyle en position méta les unes par rapport aux autres.

De préférence, les deux positions ortho de chaque fonction hydroxyle d'au moins un noyau aromatique sont non substituées.

Encore plus préférentiellement, les deux positions ortho de chaque fonction hydroxyle de chaque noyau aromatique sont non substituées.

Avantageusement, le ou chaque noyau aromatique du polyphénol aromatique est un noyau benzénique.

A titre d'exemple de polyphénol aromatique comportant un seul noyau aromatique, on peut citer en particulier, le résorcinol et le phloroglucinol, pour rappel de formules développées respectivement (IV) et (V):

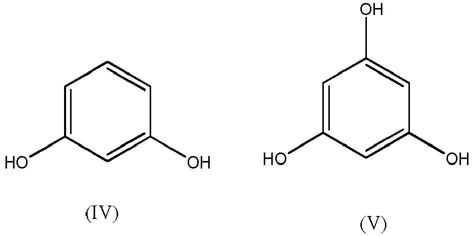

A titres d'exemples, dans le cas où le polyphénol aromatique comporte plusieurs noyaux aromatiques, au moins deux de ces noyaux aromatiques, identiques ou différents, sont choisis parmi ceux de formules générales : 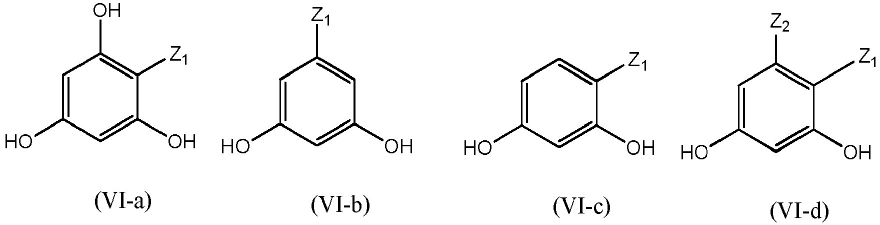 dans lesquelles les symboles Z₁, Z₂, identiques ou différents s'ils sont plusieurs sur le même noyau aromatique, représentent un atome (par exemple carbone, soufre ou oxygène) ou un groupe de liaison par définition au moins divalent, qui relie au moins ces deux noyaux aromatiques au reste du polyphénol aromatique.

Un autre exemple de polyphénol aromatique est le 2,2',4,4'-tétrahydroxydiphényl sulfide de formule développée suivante (VII) :

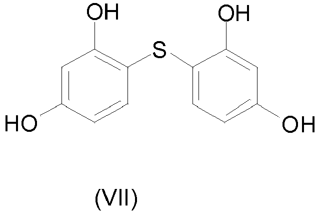

Un autre exemple de polyphénol aromatique est le 2,2',4,4'-tétrahydroxydiphényl benzophénone de formule développée suivante (VIII) :

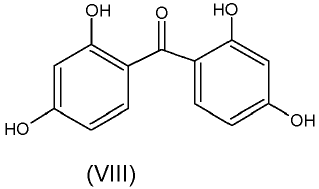

On note que chaque composé VII et VIII est un polyphénol aromatique comportant deux noyaux aromatiques (de formules VI-c) dont chacun est porteur d'au moins deux (en l'occurrence de deux) fonctions hydroxyle en position méta l'une par rapport à l'autre.

On note que dans le cas d'un polyphénol aromatique comportant au moins un noyau aromatique conforme à la formule VI-b, les deux positions ortho de chaque fonction hydroxyle d'au moins un noyau aromatique sont non substituées. Dans le cas d'un polyphénol aromatique comportant plusieurs noyaux aromatiques conformes à la formule VI-b, les deux positions ortho de chaque fonction hydroxyle de chaque noyau aromatique sont non substituées.

Selon un mode de réalisation de l'invention, le polyphénol aromatique est choisi dans le groupe constitué par le résorcinol (IV), le phloroglucinol (V), le 2,2',4,4'-tétrahydroxydiphényl sulfide (VII), la 2,2',4,4'-tétrahydroxybenzophenone (VIII), et les mélanges de ces composés. Dans un mode de réalisation particulièrement avantageux, le polyphénol aromatique est le phloroglucinol.

Dans un mode de réalisation, le polyphénol aromatique A2 comprend une résine pré-condensée à base du polyphénol aromatique tel que décrit dans l'un quelconque de ces modes de réalisations.

Cette résine pré-condensée est avantageusement à base :
- d'au moins un polyphénol aromatique tel que défini précédemment, et préférentiellement choisi dans le groupe constitué par le résorcinol, le phloroglucinol , le 2,2',4,4'-tétrahydroxydiphényl sulfide , la 2,2',4,4'-tétrahydroxybenzophenone, et leurs mélanges ; et
- d'au moins un composé susceptible de réagir avec le polyphénol aromatique comprenant au moins une fonction aldéhyde et/ou au moins un composé susceptible de réagir avec le polyphénol aromatique comprenant au moins deux fonctions hydroxyméthyle, et préférentiellement un aldéhyde aromatique comprenant au moins un noyau aromatique porteur d'au moins une fonction aldéhyde.

Le composé susceptible de réagir avec le polyphénol aromatique avec le composé A1 peut être un composé aromatique tel que défini précédemment ou tout autre aldéhyde. Avantageusement, ledit composé est choisi dans le groupe constitué par un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, le formaldéhyde, le furfuraldéhyde, le 2,5-furanedicarboxaldéhyde, le 1,4-benzènedicarboxaldéhyde, le 1,3-benzènedicarboxaldéhyde, le 1,2-benzènedicarboxaldéhyde et les mélanges de ces composés. Très avantageusement, lorsque le composé susceptible de réagir avec le polyphénol aromatique est un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, ce composé est choisi dans le groupe constitué par le 5-(hydroxyméthyl)-furfural, le 2,5-di(hydroxyméthyle)furane et les mélanges de ces composés.

Ainsi, dans la résine pré-condensée à base de polyphénol aromatique, le motif répétitif répond aux caractéristiques du polyphénol aromatique définies précédemment à l'exception qu'au moins un des atomes de carbone du noyau aromatique, qui était non substitué, est relié à un autre motif.

Quel que soit le composé autre que le polyphénol aromatique à la base de la résine pré-condensée, cette résine pré-condensée est dépourvue de formaldéhyde libre. En effet, même dans le cas où la résine pré-condensée est à base d'un polyphénol aromatique tel que décrit précédemment et de formaldéhyde, le formaldéhyde ayant déjà réagi avec le polyphénol aromatique, la résine pré-condensée est dépourvue de formaldéhyde libre susceptible de pouvoir réagir avec un composé A1 conforme à l'invention dans une étape ultérieure.

Le polyphénol aromatique A2 peut également comprendre un mélange d'une molécule libre de polyphénol aromatique et d'une résine pré-condensée à base de polyphénol aromatique, telle que décrite précédemment. En particulier, le polyphénol aromatique A2 peut également comprendre un mélange de phloroglucinol et d'une résine pré-condensée à base de phloroglucinol.

### Monophénol aromatique A2'

Le monophénol aromatique A2' peut être conforme à deux variantes. Dans une variante, les deux positions ortho de la fonction hydroxyle sont non substituées. Dans une autre variante, au moins une position ortho et la position para de la fonction hydroxyle sont non substituées.

Avantageusement, dans la variante dans laquelle au moins une position ortho et la position para de la fonction hydroxyle sont non substituées, une unique position ortho est non substituée et la position para de la fonction hydroxyle est non substituée.

De préférence, quelle que soit la variante, les deux positions ortho de la fonction hydroxyle sont non substituées. On entend par là que les deux atomes de carbone situés de part et d'autre (en position ortho) de l'atome de carbone hydroxylé (i.e., porteur de la fonction hydroxyle) sont porteurs d'un simple atome d'hydrogène.

Encore plus préférentiellement, le reste du noyau aromatique est non substitué. On entend par là que les autres atomes de carbone du reste du noyau aromatique (ceux autres que les atomes de carbone porteurs des fonctions hydroxyle) sont porteurs d'un simple atome d'hydrogène.

Dans un mode de réalisation, le monophénol aromatique comprend plusieurs noyaux aromatiques à six chainons, au moins deux d'entre eux étant chacun porteur d'une unique fonction hydroxyle et, pour au moins une des fonctions hydroxyles, les deux positions ortho de la fonction hydroxyle sont non substituées, ou au moins une position ortho et la position para de la fonction hydroxyle sont non substituées.

De préférence, les deux positions ortho de chaque fonction hydroxyle d'au moins un noyau aromatique à six chainons sont non substituées.

Encore plus préférentiellement, les deux positions ortho de chaque fonction hydroxyle de chaque noyau aromatique à six chainons sont non substituées.

Encore plus préférentiellement, le reste de chacun des noyaux aromatiques est non substitué. On entend par là que les autres atomes de carbone du reste de chaque noyau aromatique (ceux autres que les atomes de carbone porteurs des fonctions hydroxyle ou porteurs du groupe liant entre eux les noyaux aromatiques) sont porteurs d'un simple atome d'hydrogène.

Avantageusement, le ou chaque noyau aromatique du monophénol aromatique est un noyau benzénique.

De préférence, le monophénol aromatique est choisi dans le groupe constitué par le phénol, l'ortho crésol, le méta crésol, le para crésol, l'ortho chlorophénol, le méta chlorophénol, le para chlorophénol, l'acide 2-hydroxybenzoïque, l'acide 3-hydroxybenzoïque, l'acide 4-hydroxybenzoïque le 4-vinylphénol, le 4-éthylphénol, le 4-isopropylphénol, le 4-isobutylphénol, l'acide paracoumarique et les mélanges de ces composés.

Dans un mode de réalisation, le monophénol aromatique A2' comprend une résine pré-condensée à base du monophénol aromatique tel que décrit dans l'un quelconque de ces modes de réalisations.

Cette résine pré-condensée est avantageusement à base :
- d'au moins un monophénol aromatique tel que défini précédemment, et préférentiellement choisi dans le groupe constitué par le phénol, l'ortho crésol, le méta crésol, le para crésol, l'ortho chlorophénol, le méta chlorophénol, le para chlorophénol, l'acide 2-hydroxybenzoïque, l'acide 3-hydroxybenzoïque, l'acide 4-hydroxybenzoïque le 4-vinylphénol, le 4-éthylphénol, le 4-isopropylphénol, le 4-isobutylphénol, l'acide paracoumarique et les mélanges de ces composés ; et
- d'au moins un composé susceptible de réagir avec le monophénol aromatique comprenant au moins une fonction aldéhyde et/ou au moins un composé susceptible de réagir avec le monophénol aromatique comprenant au moins deux fonctions hydroxyméthyle, et préférentiellement un aldéhyde aromatique comprenant au moins un noyau aromatique porteur d'au moins une fonction aldéhyde.

Le composé susceptible de réagir avec le monophénol aromatique peut être un composé A1 tel que défini précédemment ou tout autre aldéhyde. Avantageusement, ledit composé susceptible de réagir avec le polyphénol aromatique est choisi dans le groupe constitué par un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, le formaldéhyde, le furfuraldéhyde, le 2,5-furanedicarboxaldéhyde, le 1,4-benzènedicarboxaldéhyde, le 1,3-benzènedicarboxaldéhyde, le 1,2-benzènedicarboxaldéhyde et les mélanges de ces composés. Très avantageusement, lorsque le composé est un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, ce composé est choisi dans le groupe constitué par le 5-(hydroxyméthyl)-furfural, le 2,5-di(hydroxyméthyle)furane et les mélanges de ces composés.

Ainsi, dans la résine pré-condensée à base de monophénol aromatique, le motif répétitif répond aux caractéristiques du monophénol aromatique définies précédemment à l'exception qu'au moins un des atomes de carbone du noyau aromatique à six chainons, qui était non substitué, est relié à un autre motif.

Quel que soit le composé autre que le monophénol aromatique à la base de la résine pré-condensée, cette résine pré-condensée est dépourvue de formaldéhyde libre. En effet, même dans le cas où la résine pré-condensée est à base d'un monophénol aromatique tel que décrit précédemment et de formaldéhyde, le formaldéhyde ayant déjà réagi avec le monophénol aromatique, la résine pré-condensée est dépourvue de formaldéhyde libre susceptible de pouvoir réagir avec un composé A1 conforme à l'invention dans une étape ultérieure.

Le monophénol aromatique A2' peut également comprendre un mélange d'une molécule libre de monophénol aromatique et d'une résine pré-condensée à base de monophénol aromatique, telle que décrite précédemment. En particulier, le monophénol aromatique A2' peut également comprendre un mélange de phénol et d'une résine pré-condensée à base de phénol.

### Mélange de polyphénol aromatique A2 et de monophénol aromatique A2'

Le phénol A21 peut également comprendre un mélange d'un polyphénol aromatique A2 et d'un monophénol aromatique A2', tel que décrit précédemment.

De préférence, le phénol A21 comprend un mélange de polyphénol aromatique et d'une résine pré-condensée à base de polyphénol aromatique.

### Latex d'élastomère

La composition adhésive peut comprendre de façon optionnelle un latex d'élastomère, de préférence insaturé. Un tel latex d'élastomère permet d'assurer une interface physique élastomérique lorsque la composition adhésive est utilisée pour le revêtement d'éléments destinés à être noyés dans une matrice d'élastomère. Lorsque le latex d'élastomère est insaturé, il assure également une interface chimique grâce aux insaturations susceptibles de former des ponts avec le système de réticulation de la matrice d'élastomère.

On rappelle qu'un latex est une dispersion stable de microparticules d'élastomère(s) en suspension dans une solution généralement aqueuse. Un latex d'élastomère est donc une composition dans un état liquide comprenant un solvant liquide, généralement de l'eau, et au moins un élastomère ou un caoutchouc dispersé dans le solvant liquide de façon à former une suspension. Ainsi, le latex n'est pas une composition de caoutchouc qui comprend une matrice d'élastomère ou de caoutchouc dans laquelle est dispersé au moins un autre composant. Une composition de caoutchouc est dans un état plastique à l'état cru (non-réticulé) et dans un état élastique à l'état cuit (réticulé) mais en aucun cas dans un état liquide comme l'est un latex.

Les latex d'élastomère insaturé (c'est-à-dire porteur de doubles liaisons carbone-carbone), notamment d'élastomère diénique, sont bien connus de l'homme du métier. Ils constituent notamment la base élastomérique des colles RFL décrites en introduction du présent mémoire.

L'élastomère insaturé du latex est préférentiellement un élastomère diénique, plus préférentiellement un élastomère diénique choisi dans le groupe constitué par les polybutadiènes, les copolymères de butadiène, les polyisoprènes, les copolymères d'isoprène et les mélanges de ces élastomères. Il est encore plus préférentiellement choisi dans le groupe constitué par les copolymères de butadiène, les terpolymères vinylpyridine-styrène-butadiène, le caoutchouc naturel, et les mélanges de ces élastomères.

### Procédé de fabrication d'une résine pré-condensée

On définit N1 comme le nombre de sites réactifs du composé aromatique comme suit : une fonction aldéhyde représente deux sites réactifs et une fonction hydroxyméthyle représente un site réactif. Ainsi, par exemple, le 5-(hydroxyméthyl)-furfural a N1=3 sites réactifs et le 2,5-di(hydroxyméthyle)furane a N1=2 sites réactifs.

Dans le cas d'un polyphénol aromatique, on définit N2 comme le nombre de sites réactifs du polyphénol aromatique comme suit : chaque carbone libre du noyau aromatique adjacent à une fonction hydroxyle portée par le noyau aromatique représente un site réactif, chaque carbone libre ne pouvant être compté en tant que site réactif que pour une seule fonction hydroxyle adjacente. Ainsi, par exemple, le résorcinol et le phloroglucinol ont chacun N2=3 sites réactifs et le 2,2',4,4'-tétrahydroxydiphényl sulfide a N2=4 sites réactifs.

Dans le cas d'un monophénol aromatique, on définit N'2 comme le nombre de sites réactifs du monophénol aromatique comme suit : chaque carbone libre du noyau aromatique à six chainons adjacent à la fonction hydroxyle portée par le noyau aromatique représente un site réactif et le carbone libre du noyau aromatique à six chainons positionné en para de la fonction hydroxyle représente un site réactif. Ainsi, par exemple, le phénol a N'2=3 sites réactifs.

La résine pré-condensée est obtenue par mélangeage :
- du composé A1, et
- du polyphénol aromatique A2, et optionnellement
- du monophénol aromatique A2',
dans un solvant basique ayant de préférence un pH compris entre 8 et 13, plus préférentiellement entre 9 et 12 ou dans un solvant acide ou neutre ayant de préférence un pH compris entre 4 et 7, plus préférentiellement entre 5 et 7.

La résine pré-condensée est avantageusement préparée en mélangeant progressivement le polyphénol aromatique et optionnellement le monophénol aromatique, et le composé A1 dans une solution aqueuse.

Dans une première variante, on mélange les composants à base de la résine pré-condensée dans un solvant basique tel qu'une solution aqueuse de soude, ayant de préférence un pH compris entre 8 et 13, plus préférentiellement entre 9 et 12.

Dans une deuxième variante, on mélange les composants à base de la résine pré-condensée dans un solvant acide ou neutre tel qu'une solution aqueuse ayant un pH compris entre 4 et 7, de préférence entre 5 et 7.

Dans certains cas, par exemple à des concentrations relativement élevées ou dans le cas d'un solvant acide, l'homme du métier peut être amené à ajouter un épaississant, par exemple la carboxyméthylecellulose, ou un gélifiant, par exemple une gélatine, afin de limiter la sédimentation de la résine pré-condensée.

Quelle que soit la variante, l'ensemble des constituants est mélangé sous agitation pendant un temps variable selon la température utilisée et la composition spécifique visée, par exemple pendant une durée pouvant varier entre 1 min et 6 h, à une température comprise entre 20°C et 90°C, préférentiellement entre 20 et 60°C.

Dans la première variante, on ajoute ensuite avantageusement un acide de façon à neutraliser la base et à obtenir une résine pré-condensée pouvant être stockée et utilisée ultérieurement.

Dans la deuxième variante, on ajoute ensuite avantageusement une base de façon à neutraliser l'acide et à obtenir une résine pré-condensée pouvant être stockée et utilisée ultérieurement.

Afin de préparer la résine pré-condensée, la quantité molaire n2 de polyphénol aromatique A2, la quantité molaire n'2 de monophénol aromatique A2' et la quantité molaire n1 du composé A1 sont telles que [(n2*N2)+(n'2N'2)]/(n1*N1)>1, de préférence 1<[(n2*N2)+ (n'2N'2))+(n'2N'2)]/(n1*N1)<5.

La résine pré-condensée est ensuite généralement diluée dans l'eau.

Dans la solution adhésive aqueuse finale ainsi préparée, le taux d'extrait sec de résine pré-condensée selon l'invention représente de préférence entre 2 et 30 % en poids, plus préférentiellement entre 5 et 15 % en poids.

La teneur en eau de la solution adhésive aqueuse finale ainsi préparée est de préférence comprise entre 70 et 98 % en poids, plus préférentiellement entre 85 et 95 % en poids.

Par teneur en eau de la solution adhésive aqueuse, on entend le poids en eau par rapport au poids total de la solution adhésive.

### Procédé de fabrication de la composition

La composition adhésive aqueuse conforme à l'invention peut bien entendu comporter tout ou partie des additifs habituels pour compositions adhésives aqueuses telles que ceux utilisés dans les colles RFL conventionnelles ; on citera par exemple des bases telles que ammoniaque, hydroxyde de sodium, de potassium ou d'ammonium, des colorants, charges telles que noir de carbone ou silice, antioxydants ou autre stabilisants, et des épaississants, par exemple la carboxyméthylecellulose, ou des gélifiants, par exemple une gélatine, permettant d'augmenter la viscosité de la composition. On citera également les additifs permettant de modifier le temps de prise ou de gel et le temps d'ouverture de la résine. De façon connue par l'homme du métier, le temps de prise ou de gel est le temps pendant lequel on peut appliquer la résine sur son substrat et le temps d'ouverture est le temps pendant lequel, après application de la résine sur son substrat, on peut laisser la résine à l'air libre sans altérer la qualité de la liaison adhésive ultérieure avec le substrat complémentaire. Le temps de prise ou de gel et le temps d'ouverture sont notamment fonction de la température, de la pression ou encore de la concentration en résine.

Typiquement, lors d'une première étape de résinification, on mélange, avantageusement dans l'eau, les constituants de la résine thermodurcissable elle-même.

Cette première étape de résinification peut être réalisée selon plusieurs modes de réalisations.

Avant de décrire en détail les différents modes de réalisation, on précisera tout d'abord que la résine thermodurcissable de la composition adhésive aqueuse peut être obtenue par mélange des constituant de la résine, c'est-à-dire dudit composé A1 tel que défini précédemment, dudit composé aromatique A2 tel que défini précédemment et/ou dudit composé aromatique A2' tel que défini précédemment dans un solvant basique, ayant de préférence un pH compris entre 8 et 13, plus préférentiellement entre 9 et 12.

Dans un premier mode de réalisation, on utilise une résine pré-condensée à base de polyphénol aromatique A2 telle que définie précédemment, c'est-à-dire issue à base :
- d'au moins un polyphénol aromatique, comprenant au moins un noyau aromatique porteur d'au moins deux fonctions hydroxyle en position méta l'une par rapport à l'autre, les deux positions ortho d'au moins une des fonctions hydroxyle étant non substituées ; et
- d'au moins un composé susceptible de réagir avec ledit polyphénol aromatique comprenant au moins une fonction aldéhyde et/ou au moins un composé susceptible de réagir avec ledit polyphénol aromatique comprenant au moins deux fonctions hydroxyméthyle portées par un noyau aromatique.

La résine pré-condensée à base de polyphénol aromatique A2 est avantageusement préparée en mélangeant progressivement le polyphénol aromatique et le composé comprenant au moins une fonction aldéhyde et/ou le composé comprenant au moins deux fonctions hydroxyméthyle portées par un noyau aromatique, par exemple le formaldéhyde, dans des quantités molaires telles que décrites précédemment.

Dans une variante, on mélange les composants à base de la résine pré-condensée dans un solvant basique tel qu'une solution aqueuse de soude, ayant de préférence un pH compris entre 8 et 13, plus préférentiellement entre 9 et 12.

Ainsi, la résine pré-condensée est obtenue par mélangeage :
- dudit polyphénol aromatique, et
- dudit composé susceptible de réagir avec ledit polyphénol aromatique,
dans un solvant basique ayant de préférence un pH compris entre 8 et 13, plus préférentiellement entre 9 et 12.

Dans certains cas, par exemple à des concentrations relativement élevées ou dans le cas d'un solvant acide, l'homme du métier peut être amené à ajouter un épaississant, par exemple la carboxyméthylecellulose, ou un gélifiant, par exemple une gélatine, afin de limiter la sédimentation de la résine pré-condensée.

Quelle que soit la variante, l'ensemble des constituants est mélangé sous agitation pendant un temps variable selon la température utilisée et la composition spécifique visée, par exemple pendant une durée pouvant varier entre 1 min et 6 h, à une température comprise entre 20°C et 90°C, préférentiellement entre 20 et 60°C.

Comme décrit précédemment, on peut avantageusement neutraliser le milieu de façon à obtenir une résine pré-condensée pouvant être stockée et utilisée ultérieurement.

Puis, dans ce premier mode de réalisation, la composition adhésive peut être obtenue par mélangeage :
- de cette résine pré-condensée (composé A2), et
   du composé A1,
- dans un solvant basique ayant de préférence un pH compris entre 8 et 13, plus préférentiellement entre 9 et 12.

En particulier, on mélange progressivement cette résine pré-condensée à base de polyphénol aromatique (composé A2), et le composé A1 dans un solvant basique tel qu'une solution aqueuse de soude, ayant de préférence un pH compris entre 8 et 13, plus préférentiellement entre 9 et 12. L'ensemble des constituants est mélangé sous agitation pendant un temps variable selon la température utilisée et la composition spécifique visée, par exemple pendant une durée pouvant varier entre 1 min et 6 h, à une température comprise entre 20°C et 90°C, préférentiellement entre 20 et 60°C. L'homme du métier saura ajuster les quantités molaires de résine pré-condensée à base de polyphénol aromatique A2 et du composé A1 afin d'obtenir une réticulation et une concentration adaptées à l'usage recherché, notamment en fonction de la nature de la résine pré-condensée à base de polyphénol aromatique A2.

Dans un deuxième mode de réalisation, on utilise une résine pré-condensée telle que décrite précédemment, c'est-à-dire à base :
- d'au moins un composé A1, le composé A1 étant choisi parmi :
   ∘ un composé A11 comprenant au moins deux fonctions, l'une de ces fonctions étant une fonction hydroxyméthyle, l'autre étant une fonction aldéhyde ou une fonction hydroxyméthyle, ou
   ∘ un composé A12 comprenant au moins une fonction aldéhyde, ou
   ∘ un mélange d'un composé A11 et d'un composé A12 ; et
- d'au moins un polyphénol aromatique A2 comprenant au moins un noyau aromatique porteur d'au moins deux fonctions hydroxyle en position méta l'une par rapport à l'autre, les deux positions ortho d'au moins une des fonctions hydroxyle étant non substituées, par exemple le phloroglucinol.

Dans ce deuxième mode de réalisation, la résine pré-condensée à base de polyphénol aromatique conforme à l'invention est préparée dans des conditions analogues à la résine pré-condensée à base de polyphénol aromatique du premier mode de réalisation. Puis, on mélange progressivement cette résine pré-condensée à base de polyphénol aromatique selon l'invention A2 et le composé A1 dans des conditions analogues à celles du premier mode de réalisation. Là encore, l'homme du métier saura ajuster les quantités molaires de résine pré-condensée à base de polyphénol aromatique A2 et du composé A1 afin d'obtenir une réticulation et une concentration adaptées à l'usage recherché, notamment en fonction de la nature de la résine pré-condensée à base de polyphénol aromatique A2.

Dans un troisième mode de réalisation, on utilise un polyphénol aromatique A2 selon l'invention sous forme d'une molécule simple, par exemple du phloroglucinol.

Dans une première variante, la résine thermodurcissable est obtenue par :
- mélangeage du polyphénol aromatique A2 sous forme d'une molécule simple dans un solvant basique ayant de préférence un pH compris entre 8 et 13, plus préférentiellement entre 9 et 12,
- puis ajout du composé A1.

En particulier, on mélange tout d'abord le polyphénol aromatique A2 dans un solvant basique tel qu'une solution aqueuse de soude, ayant de préférence un pH compris entre 8 et 13, plus préférentiellement entre 9 et 12.

Dans certains cas, par exemple à des concentrations relativement élevées ou dans le cas d'un solvant acide, l'homme du métier peut être amené à ajouter un épaississant, par exemple la carboxyméthylecellulose, ou un gélifiant, par exemple une gélatine, afin de limiter la sédimentation du polyphénol aromatique A2.

Puis, on ajoute le composé A1. En particulier, on ajoute progressivement le composé A1 dans des conditions analogues à celles du premier mode de réalisation.

Dans une deuxième variante, la résine thermodurcissable est obtenue par :
- mélangeage du composé A1 dans un solvant basique ayant de préférence un pH compris entre 8 et 13, plus préférentiellement entre 9 et 12,
- puis ajout du polyphénol aromatique A2 sous forme d'une molécule simple.

En particulier, on mélange tout d'abord le composé A1 dans une solution aqueuse, de préférence dans un solvant basique tel qu'une solution aqueuse de soude, ayant de préférence un pH compris entre 8 et 13, plus préférentiellement entre 9 et 12. Puis, on ajoute le polyphénol aromatique A2 et on mélange les composants dans des conditions analogues à celles du premier mode de réalisation.

On mélange une quantité molaire n2 de polyphénol aromatique A2 et une quantité molaire n1 du composé A1 telles que 0,3≤(n2*N2)/(n1*N1)≤3 et de préférence 1<(n2*N2)/(n1*N1)≤2.

Dans chacun des trois modes de réalisation précédents, on pourrait remplacer le polyphénol aromatique, en totalité ou en partie, par un monophénol aromatique comprenant au moins un noyau aromatique à six chainons portant une unique fonction hydroxyle, les deux positions ortho de la fonction hydroxyle étant non substituées, ou au moins une position ortho et la position para de la fonction hydroxyle étant non substituées.

Dans ce cas, dans le troisième mode de réalisation décrit ci-dessus dans lequel on utilise des composés sous forme de molécules simples, on mélangerait alors une quantité molaire n2 de polyphénol aromatique A2 et/ou une quantité molaire n'2 de monophénol aromatique A2' et une quantité molaire n1 du composé A1 telle que 0,3≤[(n2*N2)+ (n'2*N'2)]/(n1*N1)≤3 et de préférence 1<[(n2*N2)+ (n'2*N'2)]/(n1*N1)≤2.

Dans l'un quelconque de ces trois modes de réalisation, la résine thermodurcissable partiellement réticulée est généralement diluée dans l'eau, avant d'être ajoutée au latex ou aux latex (s'ils sont plusieurs) d'élastomère(s) insaturé(s) pour constituer la composition adhésive aqueuse de l'invention, selon un mode opératoire général qui est bien connu de l'homme du métier dans le domaine des colles RFL.

De préférence, lors de cette étape de constitution de la composition adhésive aqueuse, on fera en sorte que la composition adhésive aqueuse présente un pH compris entre 8 et 13, plus préférentiellement entre 9 et 12 de façon à limiter l'éventuelle précipitation du ou de certains latex d'élastomère(s) insaturé(s).

Ainsi, dans le cas où, lors de l'étape de résinification précédent cette étape de constitution de la composition adhésive aqueuse, on a utilisé un solvant acide ou neutre ou un solvant basique qui a été neutralisé, on ajoutera une base permettant d'obtenir un pH compris entre 8 et 13, plus préférentiellement entre 9 et 12 préalablement à l'ajout du ou des latex d'élastomère(s) insaturé(s) de façon à limiter l'éventuelle précipitation du ou de certains latex d'élastomère(s) insaturé(s).

Par exemple, les constituants de la composition adhésive sont ajoutés dans l'ordre suivant : l'eau, d'éventuels additifs solubles dans l'eau (par exemple ammoniaque), le ou les latex (peu importe l'ordre), la résine thermodurcissable partiellement réticulée (diluée).

L'ensemble est mélangé sous agitation pendant 1 à 30 min, par exemple à 20°C.

Lors d'une dernière étape de fabrication, dite de maturation, la composition adhésive aqueuse est généralement stockée à température ambiante (23°C) pendant un temps de maturation pouvant varier typiquement de 1 à plusieurs heures voire plusieurs jours, avant son utilisation finale.

### DISPOSITIF D'ELECTRODEPOSITION SELON L'INVENTION

L'invention concerne également un dispositif d'électrodéposition tel que défini précédemment.

Dans un mode réalisation, les moyens permettant de créer une différence de potentiel comprennent un générateur de courant. Dans ce mode de réalisation, on fixe une valeur du courant afin de créer la différence de potentiel. En variante, on pourrait utiliser un générateur de tension de façon à fixer la valeur de la tension.

Dans une première variante, le pôle positif du générateur de courant est relié à l'élément conducteur et le pôle négatif du générateur de courant est relié à la composition adhésive.

Dans une deuxième variante, le pôle positif du générateur de courant est relié à la composition adhésive et le pôle négatif du générateur de courant est relié à l'élément conducteur.

Plus préférentiellement, les moyens permettant de créer une différence de potentiel comprennent au moins une poulie électriquement conductrice au contact de laquelle l'élément conducteur est apte à défiler, la poulie étant reliée au générateur de courant de façon à créer une différence de potentiel entre la poulie électriquement conductrice et la composition adhésive.

Avantageusement, les moyens de mise en contact comprennent des moyens de défilement en continu de l'élément conducteur dans la composition adhésive.

De préférence, les moyens de défilement en continu comprennent un bac contenant la composition adhésive et des moyens de déroulage et d'enroulage de l'élément conducteur agencés respectivement en amont et en aval du bac.

### ELEMENT CONDUCTEUR SELON L'INVENTION

L'invention concerne également un élément conducteur revêtu tel que défini précédemment. Un tel élément conducteur est revêtu par électrodéposition d'une couche adhésive à base de la composition adhésive.

L'élément conducteur est un élément de n'importe quelle dimension et/ou de n'importe quelle forme géométrique. Il peut notamment être sous forme filaire, sous forme de poutre, de plaque, de grillage ou encore de tissu métallique.

De préférence, l'élément conducteur est un élément filaire métallique.

Préférentiellement, l'élément filaire conducteur revêtu est obtenu par le procédé selon l'invention.

L'élément filaire conducteur peut comprendre, dans un mode de réalisation, un unique monofilament élémentaire conducteur. Dans un autre mode de réalisation, l'élément filaire conducteur comprend plusieurs monofilament élémentaires conducteurs assemblés ensemble, par exemple par câblage ou retordage. Parmi les éléments filaires conducteurs comprenant plusieurs monofilaments élémentaires conducteurs, on citera par exemple les câbles à couches et les câbles multi-torons. Chaque monofilament élémentaire conducteur est unitaire, c'est-à-dire que les constituants de chaque monofilament élémentaire conducteur sont indissociables les uns des autres.

Avantageusement, l'élément filaire conducteur est un élément filaire métallique. Plus préférentiellement, le ou chaque monofilement élémentaire conducteur est avantageusement métallique. Plus préférentiellement, le ou chaque monofilament élémentaire conducteur comprend une âme en acier. L'âme en acier est monolithique, c'est-à-dire qu'elle est par exemple venue de matière ou de moulage.

Par monofilament, on entend les éléments longilignes de grande longueur relativement à leur section transversale, quelle que soit la forme de cette dernière, par exemple circulaire, oblongue, rectangulaire ou carrée, ou même plate, ce monofilament pouvant être rectiligne comme non rectiligne, par exemple torsadé, ou ondulé. Lorsqu'il est de forme circulaire, le diamètre de chaque monofilament est de préférence inférieur à 5 mm. De préférence, le ou chaque monofilament présente une section circulaire de diamètre compris entre 0,05 mm et 0,50 mm.

Dans une variante, l'élément métallique est un feuillard, une bande ou un ruban qui présente une grande longueur par rapport à son épaisseur. L'épaisseur de tels éléments métalliques est de préférence inférieure à 2 mm, plus préférentiellement inférieure à 1 mm. Plus préférentiellement encore, cette épaisseur est comprise entre 0,1 et 0,8 mm, en particulier dans un domaine de 0,15 à 0,5 mm, plus particulièrement encore dans un domaine de 0,2 à 0,5 mm, plus particulièrement encore dans un domaine de 0,25 à 0,45 mm ou dans un domaine de 0,15 à 0,35 mm. La largeur de de tels éléments métalliques est comprise entre 1 et 15 mm, plus préférentiellement supérieure à 1 mm et inférieure ou égale à 10 mm, plus préférentiellement encore dans un domaine de 2,5 à 10 mm, plus préférentiellement encore de 2,5 à 5 mm.

Dans un mode de réalisation, la couche adhésive revêt directement l'âme en acier du ou de chaque monofilament élémentaire conducteur. La couche adhésive revêt au moins une partie du ou de chaque monofilament élémentaire conducteur. Ainsi, la couche adhésive peut revêtir partiellement ou en totalité le ou chaque monofilament élémentaire conducteur. Ainsi, dans le mode de réalisation dans lequel l'élément filaire conducteur comprend un unique monofilament élémentaire conducteur, la couche adhésive peut revêtir certaines parties de ce monofilament ou bien sa totalité. Dans le mode de réalisation dans lequel l'élément filaire conducteur comprend plusieurs monofilaments élémentaires conducteurs, la couche adhésive peut revêtir plusieurs monofilaments élémentaires conducteurs sans en revêtir d'autres ou bien revêtir uniquement certaines parties de certains ou de tous les monofilaments élémentaires conducteurs.

Dans un autre mode de réalisation, la couche adhésive revêt directement une couche d'un revêtement conducteur revêtant directement l'âme en acier du ou de chaque monofilament élémentaire conducteur. Le métal de la couche du revêtement conducteur est réalisé dans un métal différent de l'acier.

Dans encore un autre mode de réalisation, la couche adhésive revêt directement une couche intermédiaire d'adhésion non métallique revêtant l'âme en acier du ou de chaque monofilament élémentaire conducteur. Dans une variante de ce mode de réalisation, la couche intermédiaire d'adhésion non métallique revêt directement la couche du revêtement métallique revêtant directement l'âme en acier du ou de chaque élément filaire conducteur. La couche intermédiaire non métallique, généralement appelée primaire d'adhésion, permet, en combinaison avec la couche adhésive comprenant la composition adhésive, d'améliorer l'adhésion de l'élément filaire conducteur à la matrice élastomérique.

Dans un autre mode de réalisation, on revêt directement une couche d'un revêtement métallique revêtant directement l'âme en acier du ou de chaque monofilament élémentaire conducteur par la couche adhésive. Le métal de la couche du revêtement métallique est réalisé dans un métal différent de l'acier.

De préférence, le métal de la couche du revêtement métallique revêtant directement au moins une partie de l'âme en acier du ou de chaque monofilament élémentaire conducteur est choisi parmi le zinc, le cuivre, l'étain et les alliages de ces métaux. Comme exemples d'alliages de ces métaux, on citera le laiton et le bronze.

Dans encore un autre mode de réalisation, la couche adhésive revêt directement une couche intermédiaire d'adhésion non métallique revêtant l'âme en acier du ou de chaque monofilament élémentaire conducteur. Dans une variante de ce mode de réalisation, la couche intermédiaire d'adhésion non métallique revêt directement la couche du revêtement métallique revêtant directement l'âme en acier du ou de chaque monofilament élémentaire conducteur. La couche intermédiaire non métallique, généralement appelée primaire d'adhésion, permet, en combinaison avec la couche adhésive à base de la composition adhésive, d'améliorer l'adhésion de l'élément filaire à la matrice élastomérique. De tels primaires d'adhésion sont ceux couramment utilisés par l'homme du métier pour le pré-encollage de certaines fibres textiles (notamment fibres en polyester, par exemple PET, en aramide, en aramide/nylon). Par exemple, on pourra utiliser un primaire à base d'époxy, notamment à base de polyglycérol polyglycidyl éther. On pourra également utiliser un primaire à base d'isocyanate bloqué.

L'acier peut présenter une microstructure perlitique, ferritique, austénitique, bainitique, martensitique ou une microstructure issue d'un mélange de ces microstructures.

De préférence, l'acier comprend un taux de carbone allant de 0,2 % à 1 % en masse et plus préférentiellement de 0,3 % à 0,7 % en masse.

Dans un mode de réalisation, l'acier utilisé comprend moins de 0,5 %, de préférence au plus 0,05 % borne incluse, et plus préférentiellement au plus 0,02 % borne incluse en masse de chrome.

Dans un autre mode de réalisation utilisant de l'acier dit inoxydable, l'acier comprend au moins 0,5 % borne incluse, de préférence au moins 5 % borne incluse et plus préférentiellement au moins 15 % borne incluse en masse de chrome.

### COMPOSITE SELON L'INVENTION

L'invention concerne également un composite d'élastomère renforcé d'au moins un élément conducteur revêtu tel que défini précédemment. La matrice d'élastomère est à base d'une composition d'élastomère comprenant au moins un élastomère et un autre constituant.

De préférence, la composition d'élastomère comprend un élastomère diénique. Par élastomère ou caoutchouc (les deux termes étant synonymes) du type "diénique", on entend de manière générale un élastomère issu au moins en partie (i.e. un homopolymère ou un copolymère) de monomères diènes (monomères porteurs de deux doubles liaisons carbone-carbone, conjuguées ou non).

Les compositions d'élastomère peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

Dans un premier mode de réalisation préférentiellement destiné à une utilisation pneumatique, la composition d'élastomère comprend un élastomère diénique choisi dans le groupe constitué par les polybutadiènes (BR), le caoutchouc naturel (NR), les polyisoprènes de synthèse (IR), les différents copolymères de butadiène, les différents copolymères d'isoprène, et les mélanges de ces élastomères.

De tels copolymères sont plus préférentiellement choisis dans le groupe constitué par les copolymères de butadiène-styrène (SBR), que ces derniers soient préparés par polymérisation en émulsion (ESBR) comme en solution (SSBR), les copolymères d'isoprène-butadiène (BIR), les copolymères d'isoprène-styrène (SIR) et les copolymères d'isoprène-butadiène-styrène (SBIR).

Dans un deuxième mode de réalisation préférentiellement destiné à une utilisation courroie, la composition d'élastomère comprend un élastomère choisi dans le groupe constitué par un élastomère de type éthylène alpha oléfine, un élastomère polychloroprène et les mélanges de ces élastomères, un ou plusieurs autres élastomères. La composition d'élastomère peut également comprendre un ou plusieurs autres composants.

Avantageusement, l'élastomère de type éthylène alpha oléfine est choisi dans le groupe constitué par les copolymères d'éthylène-propylène (EPM), les copolymères d'éthylène-propylène-diène (EPDM) et les mélanges de ces copolymères.

De préférence, la composition d'élastomère comprend une charge renforçante.

Lorsqu'une charge renforçante est utilisée, on peut utiliser tout type de charge renforçante connue pour ses capacités à renforcer une composition d'élastomère utilisable pour la fabrication de pneumatiques, par exemple une charge organique telle que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone conventionnellement utilisés dans les pneumatiques (noirs dits de grade pneumatique). Par exemple, on citera plus particulièrement les noirs de carbone renforçants des séries 100, 200 ou 300 (grades ASTM).

Dans le cas d'une utilisation de noirs de carbone avec un élastomère isoprénique, les noirs de carbone pourraient être par exemple déjà incorporés à l'élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinylaromatique fonctionnalisé telles que décrites dans les demandes WO-A-2006/069792 et WO-A-2006/069793.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition d'élastomère, en d'autres termes apte à remplacer, dans sa fonction de renforcement, un noir de carbone conventionnel de grade pneumatique. Une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de micro-perles, de granules, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogenée présentant une surface BET ainsi qu'une surface spécifique CTAB toutes deux inférieures à 450 m2/g, de préférence de 30 à 400 m2/g. A titres de silices précipitées hautement dispersibles (dites "HDS"), on citera par exemple les silices "Ultrasil" 7000 et "Ultrasil" 7005 de la société Evonik, les silices "Zeosil" 1165MP, 1135MP et 1115MP de la société Rhodia, la silice "Hi-Sil" EZ150G de la société PPG, les silices "Zeopol" 8715, 8745 et 8755 de la Société Huber, les silices à haute surface spécifique telles que décrites dans la demande WO 03/16837.

Enfin, l'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que de la silice, ou bien comporterait à sa surface des sites fonctionnels, notamment hydroxyle, nécessitant l'utilisation d'un agent de couplage pour établir la liaison entre la charge et l'élastomère.

De préférence, le taux de charge renforçante totale (noir de carbone et/ou charge inorganique renforçante telle que silice) est compris dans un domaine de 5 à 120 pce, plus préférentiellement de 5 à 100 pce et encore plus préférentiellement de 5 à 90 pce.

Le noir de carbone peut avantageusement constituer la seule charge renforçante ou la charge renforçante majoritaire. Bien entendu on peut utiliser un seul noir de carbone ou un coupage de plusieurs noirs de carbone de grades ASTM différents. Le noir de carbone peut être également utilisé en coupage avec d'autres charges renforçantes et en particulier des charges inorganiques renforçantes telles que décrites précédemment, et en particulier de la silice.

Lorsqu'une charge inorganique (par exemple de la silice) est utilisée dans la composition de caoutchouc, seule ou en coupage avec du noir de carbone, son taux est compris dans un domaine de 0 à 70 pce, préférentiellement de 0 à 50 pce, en particulier également de 5 à 70 pce, et encore plus préférentiellement cette proportion varie de 5 à 50 pce, particulièrement de 5 à 40 pce.

De préférence, la composition d'élastomère comprend des additifs divers.

Les compositions de caoutchouc peuvent comporter également tout ou partie des additifs usuels habituellement utilisés dans les compositions d'élastomères destinées à la fabrication de pneumatiques, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, des agents anti-fatigue ou bien encore des promoteurs d'adhésion.

De préférence, la composition d'élastomère comprend un système de réticulation, plus préférentiellement de vulcanisation.

Dans le premier mode de réalisation préférentiellement destiné à une utilisation pneumatique, la composition d'élastomère comprend un système de vulcanisation.

Le système de vulcanisation, comprend un agent donneur de soufre, par exemple du soufre.

De préférence, le système de vulcanisation comprend des activateurs de vulcanisation tels que l'oxyde de zinc et l'acide stéarique.

De préférence, le système de vulcanisation comprend un accélérateur de vulcanisation et/ou un retardateur de vulcanisation.

Avantageusement, le composite est tel que la matrice d'élastomère est à base d'une composition d'élastomère comprenant un système de réticulation comprenant un taux de soufre moléculaire allant de 1 à 5 pce. Par soufre moléculaire, on entend du soufre issu d'un composé Sn avec n>2. En effet, les inventeurs émettent l'hypothèse qu'il existe une compétition entre l'adhésion par la composition adhésive et l'adhésion par les dendrites de sulfure de cuivre et de zinc. Or cette compétition a tendance à réduire le niveau général de l'adhésion. Plus on diminue le taux de soufre présent dans la matrice d'élastomère, plus on diminue cette compétition, plus on favorise le niveau d'adhésion par la seule composition adhésive.

Très avantageusement, le taux de soufre moléculaire du système de réticulation de la composition d'élastomère est inférieur ou égal à 4 pce, de préférence à 3 pce et plus préférentiellement à 2,5 pce. En plus de réduire encore davantage la compétition entre l'adhésion par la composition adhésive et l'adhésion par les dendrites de sulfure de cuivre et de zinc, on améliore la durée de stockage de la composition d'élastomère à température ambiante en évitant les risques de pré-vulcanisation qui surviendraient si on utilisait un taux de soufre plus élevé.

Très avantageusement, le taux de soufre moléculaire du système de réticulation de la composition d'élastomère est supérieur ou égal à 1,5 pce, de préférence à 2 pce.

Le taux de soufre est mesuré par analyse élémentaire, à l'aide du micro-analyseur Thermo Scientific Flash 2000. L'analyse comprend une étape de combustion de l'échantillon puis une étape de séparation des composés formés. Environ 1 mg d'échantillon est introduit dans le micro-analyseur, où il subit une combustion flash de 1000°C sous oxygène. Les gaz formés sont alors oxydés grâce à l'oxygène en excès et à un catalyseur d'anhydride tungstique. Une étape de réduction par passage sur du cuivre permet ensuite de piéger l'oxygène en excès, et de réduire les oxydes d'azote en N2 ainsi que les sulfites en dioxyde de soufre SO2. L'eau est piégée et les composés N2, CO2, SO2 formés sont ensuite séparés sur une colonne chromatographique puis détectés par un catharomètre. La quantification du soufre total est réalisée par mesure de l'aire du pic de SO₂, après calibration avec des standards.

L'ensemble des accélérateurs, retardateurs et activateurs de vulcanisation est utilisé à un taux préférentiel compris dans un domaine de 0,5 à 15 pce. Le ou les activateurs de vulcanisation est ou sont utilisés à un taux préférentiel compris dans un domaine de 0,5 et 12 pce.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, divers accélérateurs secondaires ou activateurs de vulcanisation connus tels qu'oxyde de zinc, acide stéarique, dérivés guanidiques (en particulier diphenylguanidine), etc.

On peut utiliser comme accélérateur (primaire ou secondaire) tout composé susceptible d'agir comme accélérateur de vulcanisation des élastomères diéniques en présence de soufre, notamment des accélérateurs du type thiazole ainsi que leurs dérivés, des accélérateurs de type thiurame, et de type dithiocarbamate de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl- 2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

Dans le deuxième mode de réalisation préférentiellement destiné à une utilisation courroie, le système de réticulation est sensiblement dépourvu de souffre, et comprend avantageusement un peroxyde, de préférence un peroxyde organique. Avantageusement, le taux de peroxyde va de 0,5 à 8 pce. Avantageusement, le système de réticulation comprend un agent de co-réticulation, de préférence du soufre ou du triallylcyanurate. Avantageusement, le taux de l'agent de co-réticulation va de 0,5 à 5 pce.

### PNEUMATIQUE SELON L'INVENTION

L'invention concerne également un pneumatique. Le composite d'élastomère de l'invention est avantageusement utilisable pour le renforcement de pneumatiques de tous types de véhicules, en particulier véhicules tourisme ou véhicules industriels tels que Poids-lourd.

### COURROIE SELON L'INVENTION

L'invention concerne également une courroie. Par exemple, une telle courroie peut être une courroie de transmission de puissance.

### UTILISATION SELON L'INVENTION

L'invention concerne également l'utilisation de la composition adhésive précédemment décrite.

L'invention sera mieux comprise à la lecture de la description qui va suivre, donnée uniquement à titre d'exemple non limitatif et faite en se référant aux dessins dans lesquels:
- la figure 1 est un schéma d'un pneumatique selon l'invention;
- la figure 2 est un schéma d'une courroie selon l'invention ;
- la figure 3 est une représentation schématique d'une installation de fabrication d'un élément conducteur selon l'invention ;
- la figure 4 est un schéma d'un dispositif d'électrodéposition selon l'invention de l'installation de la figure 3 ;
- la figure 5 est un diagramme illustrant les différentes étapes d'un procédé de fabrication d'un pneumatique ou d'une courroie, d'un composite d'élastomère et d'un élément filaire conducteur comprenant des étapes d'un procédé d'électrodéposition selon l'invention;
- la figure 6 est une photographie obtenue par microscopie électronique à balayage d'une coupe perpendiculaire à l'axe principal d'un élément filaire obtenu par un procédé de trempage classique, et
- la figure 7 est une photographie obtenue par microscopie électronique à balayage d'une coupe perpendiculaire à l'axe principal d'un élément filaire obtenu par le procédé d'électrodéposition selon l'invention.

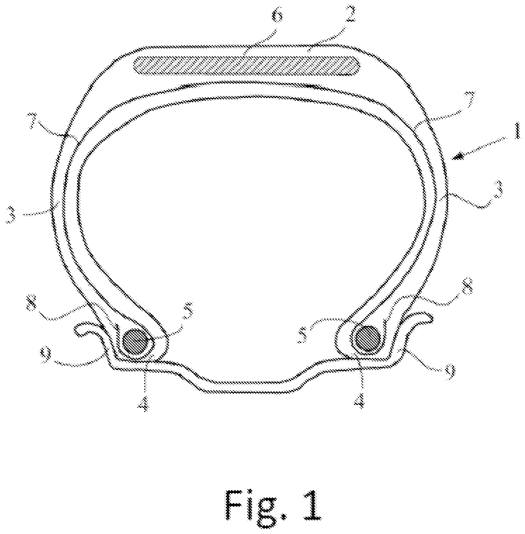

La figure 1 annexée représente de manière très schématique (sans respect d'une échelle spécifique), une coupe radiale d'un pneumatique conforme à l'invention pour véhicule du type tourisme.

Ce pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits "radiaux", par exemple textiles, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Ce pneumatique 1 de l'invention a par exemple pour caractéristique essentielle qu'au moins une armature de sommet 6 comporte un élément conducteur, ici un élément filaire conducteur revêtu ou un composite d'élastomère selon l'invention. Selon un autre exemple de mode de réalisation possible de l'invention, ce sont par exemple les tringles qui pourraient être constituées, en tout ou partie, d'un élément conducteur, ici un élément filaire conducteur revêtu.

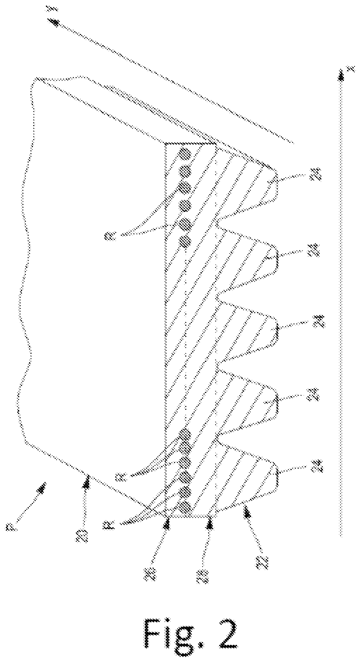

On a représenté sur la figure 2 une courroie de transmission de puissance P. La courroie de transmission de puissance P est destinée à l'entrainement en rotation d'un organe quelconque. La courroie de transmission de puissance P comprend un corps élastomérique 20 réalisé dans une matrice élastomérique et dans lequel sont noyés des éléments de renfort conducteurs, ici métalliques, revêtus R. La courroie de transmission de puissance P comprend également une couche 22 d'entrainement mécanique agencée au contact du corps élastomérique 20. La couche d'entrainement mécanique 22 est pourvue de plusieurs nervures 24 s'étendant chacune selon une direction générale Y sensiblement perpendiculaire à une direction longitudinale X de la courroie P. Chaque nervure 24 présente une forme trapézoïdale en section transversale. Les directions générales des nervures 24 sont sensiblement parallèles entre elles. Les nervures 24 s'étendent sur toute la longueur de la courroie P. Ces nervures 24 sont destinées à être engagées dans des gorges ou des rainures de forme complémentaire, par exemple portées par des poulies sur lesquelles la courroie est destinée à être montée.

Le corps élastomérique 20 est formé d'une part par une première couche élastomérique 26 réalisée dans une première matrice élastomérique et d'autre part par une deuxième couche élastomérique 28 réalisée dans une deuxième matrice élastomérique. La couche d'entrainement mécanique 22 est formée par une troisième couche réalisée dans une troisième matrice élastomérique.

Chaque première et deuxième matrice élastomérique est à base respectivement d'une première et deuxième composition d'élastomère chacune comprenant une charge renforçante, ici du noir de carbone (10 à 100 pce), un sel métallique d'acide organique α, β insaturé, ici du monométhacrylate de zinc (2 à 50 pce), un agent de dispersion de la charge renforçante (1 à 10 pce), un antioxydant (0,5 à 8 pce), un peroxyde organique (0,5 à 8 pce), un co-agent de réticulation (0,5 à 5 pce en poids) et un plastifiant (1 à 20 pce en poids).

Au moins l'une des première et deuxième compositions d'élastomère, et donc le corps élastomérique 20, comprend également au moins un élastomère choisi dans le groupe constitué par un élastomère de type éthylène alpha oléfine, un élastomère polychloroprène (CR) et les mélanges de ces élastomères. En l'espèce, chaque première et deuxième composition d'élastomère comprend un mélange de caoutchouc naturel (NR) et d'un copolymère d'éthylène-propylène-diène (EPDM), la proportion de caoutchouc naturel étant inférieur à 30 pce.

La troisième matrice élastomérique à base d'une troisième composition d'élastomère comprenant au moins un élastomère choisi dans le groupe constitué par un élastomère de type éthylène alpha oléfine, un élastomère nitrile hydrogéné (HNBR), un élastomère nitrile (NBR), un polyéthylène chlorosulfoné avec groupements alkyles (ACSM), un élastomère polychloroprène (CR), un polybutadiène (BR), un caoutchouc naturel (NR), un polyisoprène de synthèse (IR), un copolymère de butadiène-styrène (SBR), un copolymère d'isoprène-butadiène (BIR), un copolymère d'isoprène-styrène (SIR), un copolymère de butadiène-styrène-isoprène (SBIR) et les mélanges de ces élastomères. En l'espèce, l'élastomère de la composition d'élastomère de la troisième matrice élastomérique est choisi dans le groupe constitué par un élastomère de type éthylène alpha oléfine, un élastomère polychloroprène (CR), un polybutadiène (BR), un caoutchouc naturel (NR), un copolymère de butadiène-styrène (SBR) et les mélanges de ces élastomères. Ici, l'élastomère de la composition d'élastomère de la troisième matrice élastomérique est un élastomère de type éthylène alpha oléfine, par exemple un copolymère d'éthylène-propylène (EPM), un copolymère d'éthylène-propylène-diène (EPDM) ou un mélange de ces copolymères.

La courroie P selon l'invention a par exemple pour caractéristique essentielle qu'elle comporte plusieurs éléments conducteurs, ici des éléments filaires métalliques, revêtus R et un composite d'élastomère selon l'invention 20.

Bien entendu, l'invention concerne les objets précédemment décrits, à savoir le composite d'élastomère tel que le pneumatique ou la courroie le comportant, tant à l'état cru (avant réticulation) qu'à l'état cuit (après réticulation).

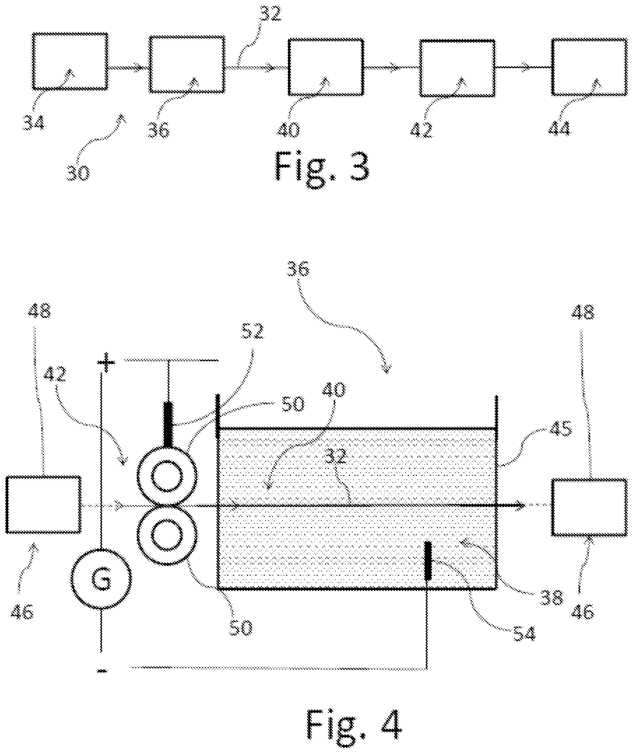

On a représenté sur la figure 3 un mode de réalisation d'une installation de fabrication d'un élément filaire conducteur selon l'invention, désignée par la référence générale 30.

L'installation de fabrication 30 est apte à fabriquer des éléments filaires conducteurs 32 comprenant un ou plusieurs monofilaments conducteurs. Le ou chaque monofilement conducteur est avantageusement métallique. Plus préférentiellement, le ou chaque monofilament élémentaire conducteur comprend une âme en acier. L'acier comprend par exemple de 0,2 % à 1,2 %, de préférence de 0,3% à 1 % et plus préférentiellement de 0,3 % à 0,7 % de carbone en masse. L'acier peut également comprendre des éléments d'addition spécifiques tels que Cr, Ni, Co, V, ou divers autres éléments connus (voir par exemple Research Disclosure 34984 - "Micro-alloyed steel cord constructions for tyres" - mai 1993 ; Research Disclosure 34054 - "High tensile strength steel cord constructions for tyres " - août 1992). En l'espèce, on utilise un acier classique à 0,7% de carbone.

L'installation 30 comprend, dans le sens du défilement de l'élément filaire conducteur 32 dans l'installation 30, d'amont en aval, des moyens 34 de stockage amont de l'élément filaire conducteur 32, un dispositif 36 d'électrodéposition d'une composition adhésive 38 sur l'élément filaire conducteur 32, un dispositif 40 de séchage de l'élément filaire conducteur revêtu 32, un dispositif 42 de traitement thermique de l'élément filaire conducteur revêtu 32 et des moyens 44 de stockage aval de l'élément filaire conducteur revêtu 32 traité thermiquement.

Les moyens amont 34 et aval 44 de stockage comprennent chacun une bobine de stockage de l'élément filaire conducteur 32 permettant respectivement de dérouler et d'enrouler l'élément filaire conducteur 32.

On a représenté sur la figure 4 le dispositif d'électrodéposition 36 selon l'invention de la figure 3. Le dispositif d'électrodéposition 36 des moyens 40 de mise en contact de l'élément filaire conducteur 32 avec la composition adhésive 38 et des moyens 42 permettant de créer une différence de potentiel entre la composition adhésive 38 et l'élément filaire conducteur 32.

Les moyens de mise en contact 40 de l'élément filaire conducteur 32 avec la composition adhésive 38 comprennent un bac 45 contenant la composition adhésive aqueuse 32 et des moyens 46 de défilement en continu de l'élément filaire conducteur 32 dans la composition adhésive 38. Les moyens de défilement 46 comprennent des moyens 48 de déroulage et d'enroulage de l'élément filaire conducteur 32 agencés respectivement en amont et en aval du bac 45. De tels moyens 48 de déroulage et d'enroulage comprennent par exemple des moyens motorisés de mise en rotation des bobines de stockage des moyens amont 34 et aval 44 de stockage.

Les moyens 42 permettant de créer une différence de potentiel entre la composition adhésive 38 et l'élément filaire conducteur 32 comprennent un générateur de courant G dont l'intensité est réglée en fonction de paramètres tels que la vitesse de défilement de l'élément filaire conducteur 32 ou encore le taux de couverture de l'élément filaire conducteur 32 par la composition adhésive 38. Les moyens 42 comprennent également d'une part des poulies électriquement conductrices 50 au contact desquelles l'élément filaire conducteur 32 est apte à défiler. Les poulies 50 sont reliées au générateur de courant G de façon à créer une différence de potentiel entre les poulies électriquement conductrices 50 et la composition adhésive 38. En l'espèce, les poulies 50 sont reliées au générateur de courant G par un contacteur 52. Les moyens 42 comprennent également une électrode 54 plongée dans la composition adhésive 38.

Dans le mode de réalisation représenté, le pôle négatif du générateur de courant G est relié à la composition adhésive et le pôle positif du générateur de courant G est relié à l'élément filaire conducteur 32.

Nous allons maintenant décrire un exemple de procédé d'électrodéposition de la composition adhésive 38 sur l'élément filaire conducteur 32 en référence à la figure 4.

Dans une première alternative, l'élément filaire conducteur 32 comprend un unique monofilament conducteur.

Dans une deuxième alternative, l'élément filaire conducteur 32 comprend plusieurs monofilaments conducteurs assemblés ensemble pour former un câble, par exemple un câble à couches ou un câble à torons.

Lors de ce procédé, on électrodépose la composition adhésive 38 sur l'élément filaire conducteur 32.

Pour ce faire, on met en contact l'élément filaire conducteur 32 avec la composition adhésive 38. Dans l'exemple décrit, la composition adhésive 38 comprend de l'eau, un mélange de latex d'élastomères insaturés, de l'ammoniaque, du phosphate de sodium et une résine à base de phloroglucinol et de 1,4-benzènedicarboxaldéhyde. Les proportions de ces différents constituants sont décrites ci-dessous. Dans d'autres modes de réalisation, la résine est à base de phloroglucinol et de 5-(hydroxyméthyl)-furfural ou bien à base d'une résine précondensée à base de formaldéhyde et de résorcinol et de 5-(hydroxyméthyl)-furfural. D'autres modes de réalisation peuvent également utiliser des résines telles que décrites précédemment. Le pH de la composition adhésive aqueuse va de 8 à 14, et de préférence de 9 à 12 et ici égal à 10,4.

On immerge l'élément filaire conducteur 32 dans la composition adhésive 38 contenue dans le bac 44. Pour cela, on déroule en continu l'élément filaire conducteur 32 de la bobine de stockage des moyens de stockage 34 et on fait défiler l'élément filaire conducteur 32 dans la composition adhésive 38. En l'espèce, on fait défiler en continu l'élément filaire conducteur 32 dans la composition adhésive 38.

On applique une différence de potentiel entre l'élément filaire conducteur 32 et la composition adhésive 38 de façon à revêtir l'élément filaire conducteur d'une couche adhésive à base de la composition adhésive 38. Pour cela, on relie l'élément filaire conducteur 32 à un potentiel supérieur par rapport au potentiel auquel on relie la composition adhésive 38.

### TESTS COMPARATIFS

### Test de corrosion

Chaque élément filaire conducteur comprend un unique monofilament élémentaire conducteur, ici un monofilament élémentaire métallique comprenant une âme en acier ayant été revêtu d'une couche métallique de laiton et présentant un diamètre égal à 0,32 mm. On a revêtu chaque élément de filaire conducteur par la composition adhésive testée selon un procédé de trempage classique ou un procédé d'électrodéposition selon l'invention. On a séché chaque élément filaire conducteur revêtu dans un four de séchage à 180 °C pendant 30 secondes. Puis, la composition adhésive a été réticulée par passage des éléments de renfort en acier revêtus dans un four de traitement à 240 °C pendant 30 secondes.

L'élément de renfort T0 est un monofilament d'acier laitonné dépourvu de couche adhésive.

L'élément de renfort T1 est un monofilament d'acier laitonné revêtu d'une couche adhésive à base d'une composition adhésive comprenant une résine à base de phloroglucinol et de 1,4-benzènedicarboxaldéhyde déposée par un procédé de trempage classique.

L'élément de renfort T2 est un monofilament d'acier laitonné revêtu d'une couche adhésive à base d'une composition adhésive comprenant une résine à base de phloroglucinol et de 1,4-benzènedicarboxaldéhyde, la couche étant déposée par un procédé d'électrodéposition.

L'élément de renfort T3 est un monofilament d'acier laitonné revêtu d'une couche adhésive à base d'une composition adhésive comprenant du Na₃PO₄ et une résine à base de phloroglucinol et de 1,4-benzènedicarboxaldéhyde, la couche étant déposée par un procédé de trempage classique.

L'élément de renfort E1 est un monofilament d'acier laitonné revêtu d'une couche adhésive à base d'une composition adhésive comprenant du Na₃PO₄ et une résine à base de phloroglucinol et de 1,4-benzènedicarboxaldéhyde, la couche étant déposée par un procédé d'électrodéposition.

L'élément de renfort E2 est un monofilament d'acier laitonné revêtu d'une couche adhésive à base d'une composition adhésive comprenant du Na₃PO₄ et une résine à base de phloroglucinol et de 5-(hydroxyméthyl)-furfural, la couche étant déposée par un procédé d'électrodéposition.

Les compositions adhésives des différents composites décrits ci-dessus sont rassemblées dans le tableau 1 ci-dessous.

**Tableau 1**

| **Compositions adhésives** | **T1, T2** | **T3**, **E1** | **E2** |
|---|---|---|---|
| **Composé A1** | | | |
| 1,4-benzènedicarboxaldéhyde (1) | 0,89 | 0,71 | - |
| 5-(hydroxyméthyl)-furfural (2) | - | - | 1,09 |

| **Composé A21/A22** | | | |
|---|---|---|---|
| Phloroglucinol (3) | 1,67 | 1,33 | 1,09 |
| SRF 1524 (4) | - | - | - |
| Hydroxyde de sodium (5) | 0,76 | - | - |
| Latex d'élastomères : | | | |
| NR (6) | 6,43 | 6,43 | 6,43 |
| SBR (7) | 3,24 | 3,24 | 3,24 |
| VP-SBR (8) | 4,48 | 4,48 | 4,48 |
| Ammoniaque (9) | 0,55 | 0,55 | 0,55 |
| Phosphate de sodium (10) | - | 0,75 | 0,62 |
| Poids total d'extrait sec de composition adhésive | 19,5 | 19,5 | 19,5 |
| Poids d'eau | 80,5 | 80,5 | 80,5 |

| | | | |
|---|---|---|---|
| (1) 1,4-benzènedicarboxaldéhyde (de la société ABCR ; de pureté 98%) ; (2) 5-(hydroxyméthyl)-furfural (de la société Aldrich ; de pureté 99%) (3) Phloroglucinol (de la société Alfa Aesar ; de pureté 99%) ; (4) Résine précondensée SRF 1524 (de la société Schenectady ; dilué à 75%) (5) Hydroxyde de sodium (de la société Aldrich ; dilué à 30%) ; (6) Latex NR (« Trang Latex » de la société Bee tex ; dilué à 61% en poids) ; (7) Latex SBR (« Encord-201 » de la société Jubilant ; dilué à 41% en poids) ; (8) Latex Vinylpyridine-styrène-butadiène («VP 106S» de Eliokem ; dilué à 41%) ; (9) Ammoniaque (de la société Aldrich ; diluée à 21%) ; (10) Na₃PO₄ Phosphate de sodium (de la société Aldrich ; de pureté 99%). | | | |

On caractérise la résistance à la corrosion en mesurant la force à rupture des éléments de renfort en acier revêtus (notée Fmax0) et la force à rupture des éléments de renfort en acier revêtus après trempage de l'élément de renfort revêtu pendant 4 jours dans un bain d'eau salée à 3,5% en masse (notée Fmax4). La force à rupture Fmax0 est fixée arbitrairement fixée à 100. La valeur de la force à rupture Fmax4 de chaque élément de renfort en acier revêtu est nécessairement inférieure à 100 et ce d'autant plus que l'élément de renfort revêtu a été sensible à la corrosion.

On a calculé la déchéance D, exprimé en %, correspondant à la perte de force à rupture entre Fmax0 et Fmax4. D est telle que D= (1-Fmax4-/ Fmax0) x 100 Plus la valeur de la déchéance D est faible, moindre est la sensibilité de l'élément de renfort revêtu à la corrosion.

Les résultats des tests effectués sur les éléments de renfort revêtus sont résumés dans le tableau 2.

**Tableau 2**

| **Elément de renfort revêtu** | **D (%)** |
|---|---|
| T0 | 33 |
| T1 | 54 |
| T2 | 49 |
| T3 | 51 |
| E1 | 23 |
| E2 | 14 |

On constate les éléments de renfort revêtus E1, E2 selon l'invention possèdent une déchéance après corrosion significativement plus faible par rapport au témoin T0.

La comparaison des éléments de renfort revêtus E1, E2 et T3 montre que le procédé d'électrodéposition est une caractéristique essentielle de l'invention sans laquelle il n'est pas possible d'obtenir une meilleure résistance à la corrosion.

La comparaison des éléments de renfort revêtus E1, E2 et T2 montre que la présence d'un sel de phosphate dans la composition adhésive est nécessaire à l'amélioration de la résistance à la corrosion.

Enfin, la comparaison des éléments de renfort T0 et T1 montre que la seule résine à base d'un composé A1 et d'un phénol A21 ne suffit pas à améliorer la résistance à la corrosion.

L'invention réside donc bien dans la combinaison synergique de l'utilisation d'une composition adhésive comprenant un sel de phosphate et une résine telle que décrite ci-dessus dans le cadre d'un procédé d'électrodéposition de cette composition adhésive.

Ces résultats démontrent également une résistance à la corrosion particulièrement performante de l'élément de renfort revêtu E2 dont la déchéance est très faible.

### Comparaison de photographies au microscope électronique à balayage

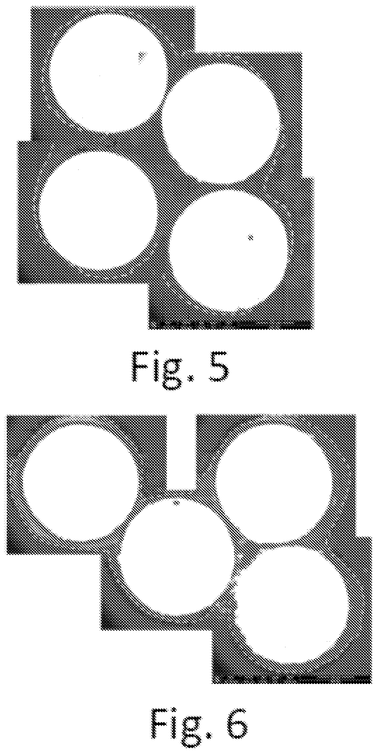

Par ailleurs, on constate, sur la figure 5, qui est la photographie au microscope électronique à balayage d'un élément filaire conducteur comprenant quatre monofilaments conducteurs comprenant chacun une âme en acier revêtu d'une couche adhésive de la composition adhésive utilisée dans le composite T3 grâce à un procédé de trempage classique, que le dépôt de la couche adhésive, d'une part, n'est pas homogène et, d'autre part, que cette couche adhésive, par endroit, ne recouvre pas la totalité de la surface externe de chaque monofilament conducteur destinée à être au contact de la matrice d'élastomère.

Au contraire, on constate, sur la figure 6, qui est la photographie d'un élément filaire analogue revêtu cette fois-ci grâce au procédé d'électrodéposition selon l'invention, que le dépôt de la couche adhésive, d'une part, est homogène et, d'autre part, que cette couche adhésive recouvre la totalité de la surface externe de chaque monofilament conducteur destinée à être au contact de la matrice d'élastomère.

L'invention ne se limite pas aux modes de réalisation précédemment décrits.

On pourra également envisager de revêtir plusieurs monofilaments conducteurs comprenant chacun une âme en acier. Dans un mode de réalisation, on assemble les monofilaments conducteurs ensemble puis on revêt collectivement monofilaments conducteurs par la composition adhésive. Dans un autre mode de réalisation, on revêt individuellement chaque monofilament conducteur par la composition adhésive puis on assemble les monofilaments conducteurs ensemble.

On pourra également envisager des monofilaments conducteurs revêtus d'une couche intermédiaire d'adhésion non métallique revêtant directement l'âme en acier des monofilaments conducteurs ou la couche de revêtement métallique, la couche de la composition adhésive revêtant alors directement cette couche intermédiaire d'adhésion non métallique ou la couche de revêtement métallique.

## Revendications

1. Procédé d'électrodéposition d'une composition adhésive sur au moins un élément conducteur, **caractérisé en ce que** :
• on met en contact l'élément conducteur avec la composition adhésive comprenant :
- au moins un sel de phosphate et,
- au moins une résine à base de :
• au moins un composé A1, le composé A1 étant choisi parmi :
∘ un composé A11 comprenant au moins deux fonctions, l'une de ces fonctions étant une fonction hydroxyméthyle, l'autre étant une fonction aldéhyde ou une fonction hydroxyméthyle, ou
∘ un composé A12 comprenant au moins une fonction aldéhyde, ou
∘ un mélange d'un composé A11 et d'un composé A12 ; et
• au moins un phénol A21 ;
• on applique une différence de potentiel entre l'élément conducteur et la composition adhésive de façon à revêtir l'élément conducteur d'une couche adhésive à base de la composition adhésive.

2. Procédé selon la revendication précédente, dans lequel on immerge l'élément conducteur dans la composition adhésive.

3. Procédé selon l'une quelconque des revendications précédentes, dans lequel on fait défiler l'élément conducteur dans la composition adhésive.

4. Procédé selon l'une quelconque des revendications précédentes, dans lequel on relie l'élément conducteur à un potentiel supérieur par rapport au potentiel auquel on relie la composition adhésive.

5. Procédé selon l'une quelconque des revendications précédentes, dans lequel le pH de la composition adhésive aqueuse est strictement supérieur à 7, de préférence le pH va de 8 à 14 et plus préférentiellement de 9 à 12.

6. Procédé selon l'une quelconque des revendications précédentes, dans lequel le sel de phosphate est choisi parmi le phosphate de sodium, le phosphate de potassium et les mélanges de ces phosphates et de préférence est le phosphate de sodium.

7. Procédé selon l'une quelconque des revendications précédentes, dans lequel l'élément conducteur est un élément filaire conducteur.

8. Procédé selon la revendication précédente, dans lequel l'élément filaire conducteur comprend au moins un monofilament élémentaire conducteur, de préférence un monofilament élémentaire métallique et plus préférentiellement un monofilament élémentaire comprenant une âme en acier.

9. Procédé selon l'une quelconque des revendications précédentes, dans lequel la teneur en eau de la composition adhésive est comprise entre 70 et 95% en poids et de préférence entre 75 et 90%.

10. Dispositif d'électrodéposition (36) d'une composition adhésive sur au moins un élément conducteur (32), **caractérisé en ce qu'il** comprend :
• des moyens de mise en contact (40) de l'élément conducteur (32) avec une composition adhésive, la composition adhésive comprenant :
- au moins un sel de phosphate et,
- au moins une résine à base de :
• au moins un composé A1, le composé A1 étant choisi parmi :
∘ un composé A11 comprenant au moins deux fonctions, l'une de ces fonctions étant une fonction hydroxyméthyle, l'autre étant une fonction aldéhyde ou une fonction hydroxyméthyle, ou
∘ un composé A12 comprenant au moins une fonction aldéhyde, ou
∘ un mélange d'un composé A11 et d'un composé A12 ; et
• au moins un phénol A21 ;
• des moyens permettant de créer une différence de potentiel (42) entre la composition adhésive et l'élément conducteur.

11. Dispositif d'électrodéposition (36) selon la revendication précédente, dans lequel les moyens permettant de créer une différence de potentiel comprennent un générateur de courant (G).

12. Elément conducteur revêtu (32) susceptible d'être obtenu par le procédé selon l'une quelconque des revendications 1 à 9.

13. Pneumatique (1) comprenant au moins un élément conducteur revêtu (32) selon la revendication 12.

14. Courroie (P) comprenant au moins un élément conducteur revêtu (32) selon la revendication 12.

15. Utilisation d'une composition adhésive comprenant :
- au moins un sel de phosphate et,
- au moins une résine à base de :
• au moins un composé A1, le composé A1 étant choisi parmi :
∘ un composé A11 comprenant au moins deux fonctions, l'une de ces fonctions étant une fonction hydroxyméthyle, l'autre étant une fonction aldéhyde ou une fonction hydroxyméthyle, ou
∘ un composé A12 comprenant au moins une fonction aldéhyde, ou
∘ un mélange d'un composé A11 et d'un composé A12 ; et
• au moins un phénol A21 ;
pour le revêtement par électrodéposition d'une couche adhésive à base de la composition adhésive sur un élément conducteur (32).

## Patentansprüche

1. Verfahren zur elektrophoretischen Abscheidung einer Klebstoffzusammensetzung auf mindestens ein Leitelement, **dadurch gekennzeichnet, dass:**
• man das Leitelement mit einer Klebstoffzusammensetzung in Kontakt bringt, die Folgendes umfasst:
- mindestens ein Phosphatsalz und
- mindestens ein Harz auf Basis von:
• mindestens einer Verbindung A1, wobei die Verbindung A1 aus:
o einer mindestens zwei Funktionen umfassenden Verbindung A11, wobei es sich bei einer dieser Funktionen um eine Hydroxymethylfunktion handelt und es sich bei der anderen um eine Aldehydfunktion oder eine Hydroxymethylfunktion handelt, oder
∘ einer mindestens eine Aldehydfunktion umfassenden Verbindung A12 oder
∘ einer Mischung von einer Verbindung A11 und einer Verbindung A12 ausgewählt ist; und
• mindestens einem Phenol A21;
• man zwischen dem Leitelement und der Klebstoffzusammensetzung eine Potentialdifferenz derart anlegt, dass das Leitelement mit einer Klebeschicht auf Basis der Klebstoffzusammensetzung beschichtet wird.

2. Verfahren nach dem vorhergehenden Anspruch, wobei man das Leitelement in die Klebstoffzusammensetzung eintaucht.

3. Verfahren nach einem der vorhergehenden Ansprüche, wobei man das Leitelement durch die Klebstoffzusammensetzung führt.

4. Verfahren nach einem der vorhergehenden Ansprüche, wobei man das Leitelement, verglichen mit dem Potential, an das man die Klebstoffzusammensetzung anschließt, an ein höheres Potential anschließt.

5. Verfahren nach einem der vorhergehenden Ansprüche, wobei der pH-Wert der wässrigen Klebstoffzusammensetzung streng höher als 7 ist, der pH-Wert vorzugsweise 8 bis 14 und weiter bevorzugt 9 bis 12 beträgt.

6. Verfahren nach einem der vorhergehenden Ansprüche, wobei das Phosphatsalz aus Natriumphosphat, Kaliumphosphat und den Mischungen dieser Phosphate ausgewählt ist und vorzugsweise Natriumphosphat ist.

7. Verfahren nach einem der vorhergehenden Ansprüche, wobei es sich bei dem Leitelement um ein drahtförmiges Leitelement handelt.

8. Verfahren nach einem der vorhergehenden Ansprüche, wobei das drahtförmige Leitelement mindestens ein elementares leitfähiges Monofilament, vorzugsweise ein metallisches elementares Monofilament und weiter bevorzugt ein eine Stahlseele umfassendes elementares Monofilament umfasst.

9. Verfahren nach einem der vorhergehenden Ansprüche, wobei der Wassergehalt der Klebstoffzusammensetzung zwischen 70 Gew.-% und 95 Gew.-%, vorzugsweise zwischen 75 Gew.-% und 90 Gew.-%, liegt.

10. Vorrichtung (36) zur elektrophoretischen Abscheidung einer Klebstoffzusammensetzung auf mindestens ein Leitelement (32), **dadurch gekennzeichnet, dass** sie Folgendes umfasst:
• Mittel zum Inkontaktbringen (40) des Leitelements (32) mit einer Klebstoffzusammensetzung, wobei die Klebstoffzusammensetzung Folgendes umfasst:
- mindestens ein Phosphatsalz und
- mindestens ein Harz auf Basis von:
• mindestens einer Verbindung A1, wobei die Verbindung A1 aus:
∘ einer mindestens zwei Funktionen umfassenden Verbindung A11, wobei es sich bei einer dieser Funktionen um eine Hydroxymethylfunktion handelt und es sich bei der anderen um eine Aldehydfunktion oder eine Hydroxymethylfunktion handelt, oder
∘ einer mindestens eine Aldehydfunktion umfassenden Verbindung A12 oder
∘ einer Mischung von einer Verbindung A11 und einer Verbindung A12 ausgewählt ist; und
• mindestens einem Phenol A21;
• Mittel (42), die das Erzeugen einer Potentialdifferenz zwischen der Klebstoffzusammensetzung und dem Leitelement ermöglichen.

11. Vorrichtung (36) zur elektrophoretischen Abscheidung nach dem vorhergehenden Anspruch, wobei die Mittel, die das Erzeugen einer Potentialdifferenz ermöglichen, einen Stromgenerator (G) umfassen.

12. Beschichtetes Leitelement (32), das durch ein Verfahren nach einem der Ansprüche 1 bis 9 erhältlich ist.

13. Reifen (1), der mindestens ein beschichtetes Leitelement (32) nach Anspruch 12 umfasst.

14. Riemen (P), der mindestens ein beschichtetes Leitelement (32) nach Anspruch 12 umfasst.

15. Verwendung einer Klebstoffzusammensetzung, die Folgendes umfasst:
- mindestens ein Phosphatsalz und
- mindestens ein Harz auf Basis von:
• einer Verbindung A1, wobei die Verbindung A1 aus:
∘ einer mindestens zwei Funktionen umfassenden Verbindung A11, wobei es sich bei einer dieser Funktionen um eine Hydroxymethylfunktion handelt und es sich bei der anderen um eine Aldehydfunktion oder eine Hydroxymethylfunktion handelt, oder
∘ einer mindestens eine Aldehydfunktion umfassenden Verbindung A12 oder
∘ einer Mischung von einer Verbindung A11 und einer Verbindung A12 ausgewählt ist; und
• mindestens einem Phenol A21;
zum Beschichten eines Leitelements (32) mit einer Klebeschicht auf Basis der Klebstoffzusammensetzung durch elektrophoretische Abscheidung.

## Claims

1. Process for the electroplating of an adhesive composition onto at least one conductive element, **characterized in that:**
• the conductive element is placed in contact with the adhesive composition comprising:
- at least one phosphate salt and
- at least one resin based on:
• at least one compound A1, compound A1 being chosen from:
∘ a compound A11 comprising at least two functions, one of these functions being a hydroxymethyl function and the other being an aldehyde function or a hydroxymethyl function, or
∘ a compound A12 comprising at least one aldehyde function, or
∘ a mixture of a compound A11 and of a compound A12, and
• at least one phenol A21,
• a potential difference is applied between the conductive element and the adhesive composition so as to coat the conductive element with an adhesive layer based on the adhesive composition.

2. Process according to the preceding claim, in which the conductive element is immersed into the adhesive composition.

3. Process according to either of the preceding claims, in which the conductive element is passed through the adhesive composition.

4. Process according to any one of the preceding claims, in which the conductive element is connected to a potential that is higher than the potential to which the adhesive composition is connected.

5. Process according to any one of the preceding claims, in which the pH of the aqueous adhesive composition is strictly greater than 7; preferably, the pH ranges from 8 to 14 and more preferentially from 9 to 12.

6. Process according to any one of the preceding claims, in which the phosphate salt is chosen from sodium phosphate, potassium phosphate and mixtures of these phosphates and is preferably sodium phosphate.

7. Process according to any one of the preceding claims, in which the conductive element is a conductive wire element.

8. Process according to the preceding claim, in which the conductive wire element comprises at least one elementary conductive monofilament, preferably an elementary metallic monofilament and more preferentially an elementary monofilament comprising a steel core.

9. Process according to any one of the preceding claims, in which the water content of the adhesive composition is between 70% and 95% by weight and preferably between 75% and 90%.

10. Device (36) for the electroplating of an adhesive composition onto at least one conductive element (32), **characterized in that** it comprises:
• means (40) for placing the conductive element (32) in contact with an adhesive composition, the adhesive composition comprising:
- at least one phosphate salt and
- at least one resin based on:
• at least one compound A1, compound A1 being chosen from:
∘ a compound A11 comprising at least two functions, one of these functions being a hydroxymethyl function and the other being an aldehyde function or a hydroxymethyl function, or
∘ a compound A12 comprising at least one aldehyde function, or
∘ a mixture of a compound A11 and of a compound A12, and
• at least one phenol A21,
• means (42) for creating a potential difference between the adhesive composition and the conductive element.

11. Electroplating device (36) according to the preceding claim, in which the means for creating a potential difference comprise a current generator (G).

12. Coated conductive element (32) which may be obtained via the process according to any one of Claims 1 to 9.

13. Tyre (1) comprising at least one coated conductive element (32) according to Claim 12.

14. Belt (P) comprising at least one coated conductive element (32) according to Claim 12.

15. Use of an adhesive composition comprising:
- at least one phosphate salt and
- at least one resin based on:
• at least one compound A1, compound A1 being chosen from:
∘ a compound A11 comprising at least two functions, one of these functions being a hydroxymethyl function and the other being an aldehyde function or a hydroxymethyl function, or
∘ a compound A12 comprising at least one aldehyde function, or
∘ a mixture of a compound A11 and of a compound A12, and
• at least one phenol A21,
for coating, by electroplating, an adhesive layer based on the adhesive composition onto a conductive element (32).
